# EUROPEAN PATENT APPLICATION

(11) **EP 4 834 840 A1**
(43) Date of publication of application: **04.11.2026**
(21) Application number: 26175447.7
(22) Date of filing: 29.04.2026
(51) Int. Cl.: C01B 33/193

(54) **SPHERICAL SILICA AND SILICA DISPERSION INCLUDING THE SAME**

(30) Priority: 02.05.2025 KR 20250057960; 31.12.2025 KR 20250216450
(71) Applicant: Chemland. Co., Ltd., Anseong-si, Gyeonggi-do 17602 (KR)
(72) Inventor: LEE, Beom Zoo, 13544 Seongnam-si, Gyeonggi-do (KR); LEE, Sul Hae, 13824 Gwacheon-si, Gyeonggi-do (KR); SEO, Won Seon, 04428 Seoul (KR)
(74) Representative: Isarpatent

(57) **Abstract**

The present invention relates to spherical silica, and a silica dispersion including the same. According to one aspect of the present invention, the spherical silica includes a plurality of spherical silica particles, each of which includes a core including a plurality of first pores and consisting of silica, and a shell consisting of the same silica as the core and including second pores different from the first pores.

## Description

### CROSS-REFERENCE TO RELATED APPLICATION

The present application claims priority and the benefit of Korean Patent Application No.10-2025-0057960, filed on May 2, 2025, and Korean Patent Application No. 10-2025-0216450, filed on December 31, 2025 in the Ministry of Intellectual Property in Korea, the entire disclosure of which is incorporated herein by reference.

### BACKGROUND

### 1. Field of the Invention

The present invention relates to spherical silica and a silica dispersion including the same, and more particularly, to spherical silica that is applicable to a composition for cosmetics, ink, coatings, and adhesives, and a silica dispersion including the same.

### 2. Discussion of Related Art

Spherical bead materials used in cosmetic compositions are widely employed to enhance sensory feel, absorb sebum and sweat, and provide shear and natural-looking coverage.

While organic beads commonly used offer advantages such as good adhesion, sensory feel, and durability, which are the unique properties of polymers, and facilitate mass-production at low cost, they have been identified as a major source of microplastic pollution, creating a need for eco-friendly alternative materials.

For this reason, silica (SiO₂) is attracting attention as an eco-friendly alternative material. Spherical silica particles are known for their excellent physical and chemical properties, including dielectric constant, moisture resistance, loadability, expansion coefficient, stress, and coefficient of friction, and their environmental safety, offering the significant advantage of being utilized in diverse industrial sectors, such as electronic components, pharmaceuticals, food products, construction, and cosmetics.

Methods of preparing such a spherical silica powder include dry methods (e.g., melt-spraying, flame synthesis, gas-phase metal combustion, and aerosol methods) and wet methods (e.g., sol-gel, precipitation, suspension, and emulsion methods).

A wet method is performed by adding an acid to water glass to precipitate silica at a pH of 2.0 to 5.0, followed by wet filtration to remove impurities and multiple drying processes. While the wet method has advantage of mass-production at low cost, silica particles manufactured using the wet method possess only a porous structure composed of relatively large pores, and their use in cosmetics is limited to applications where they are intended to reduce the sensory feel thereof.

Meanwhile, a dry method involves spraying a silica precursor into droplets or gaseous form, which passes through a reactor and induces chemical reactions through nucleation and nuclear growth, particle growth and sintering, and generating spherical silica particles through particle separation and recovery. While the dry method has an advantage of producing high-purity particles with high sphericity, it requires high installation costs, resulting in high prices for the silica particles manufactured thereby. The silica particles have a structure with pores of less than 1 to 2 nm or almost no porosity, and their utility is restricted due to their high specific gravity.

Particularly, when used in a cosmetic composition, spherical silica prepared by the wet method is difficult to control the rate at which an active ingredient is released, leading to poor durability. Since the silica with almost no porosity manufactured by the dry method has low oil absorption capacity, when used in a cosmetic composition, does not absorb oil well, leading to greasiness over time.

For these reasons, a method for growing and synthesizing spherical silica particles is required that enables mass production at low cost while simultaneously realizing a dense structure and a porous structure within a single particle.

Meanwhile, the background technology described above is technical information that the inventor possessed for the derivation of the present invention or acquired during the process of deriving the present invention, and it cannot be considered as related art disclosed to the general public prior to the filing of the present invention.

### [Related Art Documents]

### [Patent Documents]

(Patent Document 1) Japanese Patent No. 5230051, titled "Fine fused silica particles"
(Patent Document 2) Korean Patent No.10-1441169, titled "Porous silica-based particles having surface smoothness, method for producing the same, and cosmetic comprising the porous silica-based particles"
(Patent Document 3) Korean Unexamined Patent Application No. 10-2008-0028992, titled "Hollow silica particles, composition comprising the same, and method for preparing the same"

### SUMMARY OF THE INVENTION

The present invention is directed to providing spherical silica, which is capable of adjusting the adsorption and release characteristics of an active ingredient and improving oil absorption capacity and persistence by controlling the pore size and distribution of silica particles, and a dispersion including the same.

The present invention is also directed to providing spherical silica, which enables mass production at low cost and is easy to apply to cosmetic compositions, and a dispersion including the same.

The present invention is also directed to providing spherical silica as an eco-friendly powder, which can impart excellent adhesion and sensory feel to cosmetic compositions, and a dispersion including the same.

The present invention is also directed to providing spherical silica that can maintain long-term stability by preventing precipitation or phase separation even in dispersions where spherical silica particles are dispersed at high concentrations in a dispersion medium, and a silica dispersion including the same.

The present invention is also directed to providing spherical silica that provides a standard for quantitatively evaluating changes in the internal microstructure of the dispersed system and the concentration gradient over time for silica dispersions, and a silica dispersion including the same.

The present invention is also directed to providing spherical silica with excellent dispersion stability proven by quantitative indicators reflecting the relationship between the internal pore structure, tap density, and dispersion stability of spherical silica particles simultaneously exhibiting both a dense structure and a porous structure within a single particle, and a silica dispersion including the same.

As technical means for resolving the above-described technical problems, according to one aspect of the present invention, spherical silica includes a plurality of spherical silica particles, each of which includes a core having a plurality of first pores and consisting of silica and a shell consisting of the same silica and having second pores different from the first pores.

According to one embodiment of the present invention, the core and the shell may be continuously connected toward the center of the spherical silica particle to form a single body.

According to another embodiment of the present invention, the first pores may have a size of 100 nm or less, and the second pores may have a size of 20 nm or less.

According to still another embodiment of the present invention, when approaching the core from the shell, the size of the second pore may gradually increase and become the same as that of the first pore at the point where the shell and the core meet.

According to yet another embodiment of the present invention, the spherical silica particles may have a tap density of 0.40 g/mL to 0.95 g/mL, as measured by any one method of ASTM B527, ISO 787 and JIS K 5101.

According to yet another embodiment of the present invention, the average particle size (D50) according to particle size analysis (PSA) may be 0.5 to 30 µm.

According to yet another embodiment of the present invention, the thickness of the core may be 99% or less of the overall diameter of the cross-section of the spherical silica particle.

According to yet another embodiment of the present invention, the thickness of the shell may be 50% or less of the overall diameter of the cross-section of the spherical silica particle.

According to yet another embodiment of the present invention, the oil absorption capacity of a powder according to oil absorption analysis (OA) may be 0.2 to 120 mL/g.

According to yet another embodiment of the present invention, the specific surface area according to Brunauer-Emmett-Teller (BET) analysis may be 100 m²/g or less.

According to yet another embodiment of the present invention, the spherical silica particle is configured to allow the adsorption/desorption of a material through a plurality of the first and second pores, and a relative pressure to be applied to the spherical silica particle for adsorption may be different from that for desorption.

As technical means for resolving the above-described technical problems, according to another aspect of the present invention, a silica dispersion includes a dispersion medium; and spherical silica dispersed in the dispersion medium. The spherical silica may include a core having a plurality of first pores and consisting of silica, and a shell consisting of the same silica as the core and having second pores different from the first pores.

According to one embodiment of the present invention, the spherical silica may be contained at a concentration of 10 to 20 wt% in the dispersion medium, based on solid content.

According to another embodiment of the present invention, the Turbiscan stability index (TSI) of the silica dispersion, measured using a Turbiscan instrument at 25 °C, may be 0.30 or less.

According to still another embodiment of the present invention, the dispersion medium may include at least one of a hydrocarbon-based oil, an ester-based oil, a vegetable oil, and a silicone-based oil.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a field emission scanning electron microscope (FE-SEM) image of the cross-section of spherical silica particles according to one embodiment of the present invention;
FIG. 2 is a flowchart illustrating a method of manufacturing spherical silica according to one embodiment of the present invention;
FIG. 3 is an FE-SEM image of the cross-section of spherical silica particles according to Manufacturing Example 1 of the present invention;
FIG. 4 is an FE-SEM image of the cross-section of spherical silica particles according to Manufacturing Example 2 of the present invention;
FIG. 5 is an FE-SEM image of the cross-section of silica particles according to Comparative Example 2 of the present invention;
FIG. 6 is a transmission electron microscope (TEM) image of the cross-section of the spherical silica particles according to Manufacturing Example 1 of the present invention;
FIG. 7 is a TEM image of the cross-section of spherical silica particles according to Comparative Example 1 of the present invention;
FIG. 8 is an FE-SEM image of the surface of the spherical silica particles according to Manufacturing Example 1 of the present invention;
FIGs. 9A and 9B are nitrogen adsorption/desorption isotherm curves for the spherical silica particles according to Manufacturing Examples 1 and 2 of the present invention;
FIGs. 9C to 9E are nitrogen adsorption/desorption isotherm curves for silica particles according to Comparative Examples 1 to 3 of the present invention;
FIG. 10 is a graph showing the change in Turbiscan stability index (TSI) of a silica dispersion containing the spherical silica according to Manufacturing Example 1 of the present invention;
FIG. 11 is a graph showing the change in TSI of a silica dispersion containing the spherical silica according to Manufacturing Example 2 of the present invention;
FIG. 12 is a graph showing the change in TSI of a silica dispersion containing the spherical silica according to Comparative Example 1 of the present invention;
FIG. 13 is a graph showing the change in TSI of a silica dispersion containing the spherical silica according to Comparative Example 2 of the present invention;
FIG. 14 is a graph showing the changes in transmittance and backscattering intensity of the silica dispersion containing the spherical silica according to Manufacturing Example 1;
FIG. 15 is a graph showing the changes in transmittance and backscattering intensity of the silica dispersion containing the spherical silica according to Manufacturing Example 2;
FIG. 16 is a graph showing the changes in transmittance and backscattering intensity of the silica dispersion containing the spherical silica according to Comparative Example 1; and
FIG. 17 is a graph showing the changes in transmittance and backscattering intensity of the silica dispersion containing the spherical silica according to Comparative Example 2.

### DETAILED DESCRIPTION OF EXEMPLARY EMBODIMENTS

Hereinafter, embodiments of the present invention will be described in detail with reference to the accompanying drawings so that those of ordinary skill in the art can easily carry out the present invention. However, the present invention may be implemented in a variety of different forms, and is not limited to the embodiments described herein. In addition, to clearly explain the present invention in the drawings, parts that are not related to the description are omitted, and like numerals denote like parts throughout the specification.

Throughout the specification, when a part is "connected" to another part, it means that the one part is "directly connected," or "indirectly connected" with a third member therebetween. In addition, when a certain part "includes" a certain component, it means that, unless particularly stated otherwise, another component may be further included, rather than excluded.

Hereinafter, the present invention will be described in detail with reference to the accompanying drawings.

The spherical silica of the present invention is a powder-type material including silica particles having fine particle sizes ranging from hundreds of nanometers (nm) to tens of micrometers (µm). Particularly, the silica particles constituting the spherical silica of the present invention are spherical particles, and include a plurality of pores therein. Through these pores, the spherical silica of the present invention can adsorb a specific liquid or contain an active ingredient, and then gradually release it, thereby providing diverse functionalities.

In the spherical silica of the present invention, the cross-sectional pore structure of each spherical silica particle constituting the spherical silica has different characteristics according to regions. Hereinafter, the cross-sectional characteristics of each spherical silica particle constituting the spherical silica of the present invention will be described.

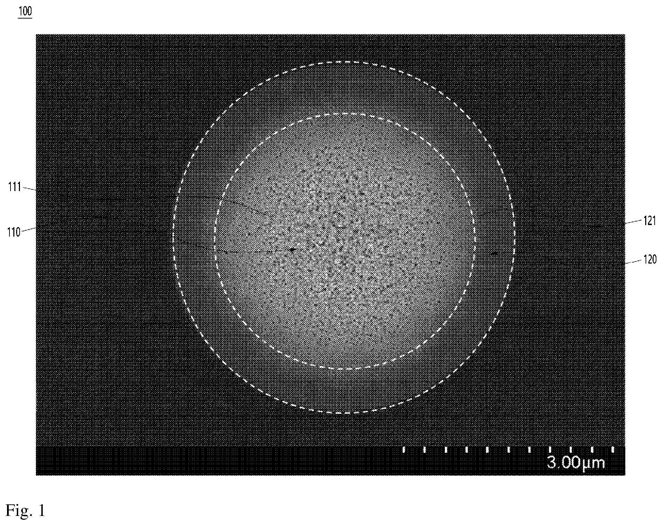

FIG. 1 is an FE-SEM image of the cross-section of spherical silica particles according to one embodiment of the present invention.

Referring to FIG. 1, spherical silica particles 100 of the present invention includes a core 110 and a shell 120 surrounding the core.

The core 110 of the spherical silica particles 100 refers to a portion corresponding to the central region of the spherical silica particles 100.

The core 110 of the spherical silica particles 100 includes first pores 111. The core 110 may be defined as a region inside the spherical silica particles 100, in which the first pores 111 are distributed.

In the spherical silica particles 100, the core 110 may be a sphere extending in the xyz directions along a predetermined diameter from the center. However, the shape of the core 110 is not limited thereto, and may be configured in various ways. As described above, since the core 110 is defined as a region inside the spherical silica particles 100, in which the first pores 111 are distributed, the shape of the core 110 may be formed in various shapes, including spherical, oval, and polygonal structures, according to the distribution of the first pore 111.

The first pore 111 is a hole formed in the core 110 and refers to a physically empty space containing no element constituting silica.

In the core 110, the first pore 111 may be configured as a sphere, but the present invention is not limited thereto. The shape of the first pore 111 may vary. As described above, as the first pore 111 is defined as a physically empty space in the core 110, containing no element constituting silica, the shape of the first pore 111 may be formed in various shapes, such as oval and polygonal structures, according to the arrangement of elements constituting silica.

The first pores 111 are composed of relatively large pores among the pores present in the spherical silica particles 100. For example, the first pores 111 preferably have a size of 150 nm or less. More preferably, the first pores 111 have a size of 100 nm or less.

The size of the first pores 111 may gradually change from the outer surface of the core 110 to the center thereof. For example, the larger the diameter of the core 110, the bigger the first pore 111. That is, the first pores 111 may become larger in the radial direction. The first pores 111 have a gradient porous structure in which their sizes increase as they approach the center of the core 110 and decrease as they are farther away from the center thereof.

The first pores 111 may have a uniform distribution throughout the entire core region. As described above, since the size of the first pores 111 becomes smaller toward the outer surface, the overall distribution of the pores may appear to be denser toward the central region.

The thickness of the core 110 formed by distributing the above-described first pores 111 may be 99% or less of the total diameter of the cross-section of the spherical silica particles 100.

When the thickness of the core 110 exceeds 99%, most of the region of the particle consists of the core 110, which may not be distinguished from the shell 120, and the particle may be substantially the same as spherical silica particles 100 having large pores.

The shell 120 refers to the outer region of the spherical silica particles 100 surrounding the core 110. The shell 120 consists of the same silica as the core 110, and has second pores 121 that are different from the first pores 111. Specifically, the shell 120 refers to a region in the spherical silica particles 100 in which the second pores 121 are distributed.

The shell 120 may be formed to surround the core 110. For example, the shell 120 preferably forms a spherical outer structure surrounding the spherical core 110.

The second pore 121 is a hole formed in the shell 120 and refers to a physically empty space containing no element constituting silica.

The second pores may be formed in a shape substantially similar to the first pores 111 of the core 110. That is, the second pores 121 may be formed in a spherical shape, but the present invention is not limited thereto. The shape of the second pores 121 may be formed in various shapes, such as oval and polygonal structures, other than a spherical shape.

The second pores 121 consist of relatively small pores among the pores present in the spherical silica particles 100. For example, the second pores 121 preferably have a size of 60 nm or less. More preferably, the second pores 121 have a size of 50 nm or less.

The thickness of the shell 120 in which the above-described second pores 121 are distributed may be 50% or less of the overall diameter of the cross-section of the spherical silica particles 100.

When the thickness of the shell 120 exceeds 50%, the region in which the second pores 121 with relatively small sizes are distributed expands, so that the connectivity between pores decreases, and the capillary force is thereby weakened. As diffusion distance through which the material absorbed into the core 110 moves out through the shell 120 increases, a problem may arise in that the release rate of the materials within the core 110 to the outside is significantly reduced.

The core 110 and shell 120 according to one embodiment of the present invention are continuously connected toward the center of the spherical silica particles 100, thereby forming a single body.

In other words, the core 110 and the shell 120 refer to regionally distinct portions within a single particle, that is, the spherical silica particle 100. Here, the single particle is a particle consisting of only one component, and is a concept distinct from a secondary particle formed by flocculating a plurality of particles or a particle formed by the flocculation of a plurality of particles and a coating on the perimeter of the resulting agglomerate.

Since the spherical silica particle 100 of the present invention consists of a single particle, pore characteristics such as pore size, pore volume, and specific surface area may be uniformly maintained throughout the particle. Since almost no stress concentration occurs at the interface between the core 110 and the shell 120, the durability of the particles may be improved.

As described above, the first pores 111 of the core 110 and the second pores 121 of the shell 120 according to one embodiment of the present invention may have different sizes. In this case, going from the shell 120 toward the core 110 of the spherical silica particles 100, the size of the second pores 121 may gradually increase, and may become the same as that of the first pores 111 at the point in which the shell 120 comes into contact with the core 110. That is, within the spherical silica particles 100, the pore size may be distributed such that it gradually decreases from the center of the core 110 toward the surface of the shell 120. Accordingly, in terms of the pore size and distribution characteristics, the spherical silica particles 100 has a gradient porous structure in which relatively large pores are distributed in the core 110 and relatively small pores are distributed in the shell 120.

According to one embodiment of the present invention, the shape of the spherical silica particles 100 may be a sphere with high sphericity, but the present invention is not limited thereto. For example, the spherical silica particles 100 may have a shape that is elliptical or spherical with a partially deformed portion.

The spherical silica of the present invention may consist of spherical silica particles 100 with the above-described characteristics. In this case, the average particle size (D50) of the spherical silica particles 100 may be 0.5 to 30 µm according to particle size analysis (PSA).

When the average particle size of the spherical silica particles 100 is less than 0.5 µm, as the surface energy of the particles increases, flocculation becomes more severe, making it difficult to separate the particles into monodisperse particles with a uniform particle size.

When the average particle size of the spherical silica particles 100 exceeds 30 µm, during the application in a cosmetic composition, large particles flocculate and are not uniformly applied, thereby degrading spreadability. In addition, when large particles contact the skin, roughness may be felt or irritation may occur in sensitive skin, such that sensory feel may deteriorate. Furthermore, large particles may have low ability to fill skin irregularities and thus may reduce adhesion.

In the spherical silica particles 100 of the present invention, a specific surface area according to BET analysis may be 100 m²/g or less.

When the specific surface area of the spherical silica particles 100 exceeds 100 m²/g, the number of surface-active sites (e.g., silanol groups) increases, thereby enhancing adsorption capacity. Therefore, not only target substances but also unnecessary molecules (e. g., organic compounds, ions, etc.) may be adsorbed, causing side reactions.

In the spherical silica particles 100 according to one embodiment of the present invention, the oil absorption amount of a powder according to oil absorption analysis (OA) may be 130 mL/g or less. Preferably, the oil absorption amount may range from 0.2 to 120 mL/g.

When the oil absorption amount of the powder exceeds 120 mL/g, excessive liquid may be absorbed through the pores within the spherical silica particles 100, and therefore the interior of the spherical silica may be saturated with the liquid, causing the powder particles to flocculate or turn into a paste, thus losing flowability.

When the oil absorption amount of the powder is less than 0.2 mL/g, not only can oil molecules not effectively penetrate the spherical silica particles 100, but also weak interactions with the oil molecules may lead to decreased adsorption capacity.

As described above, the spherical silica particles 100 according to one embodiment of the present invention have a dual structure in which the first pores 111, which are relatively large, are distributed in the core 110, and the second pores 121, which are relatively small, are distributed in the shell 120 surrounding the core 110. This structure may increase the sphericity of the particles, and may realize an overall smooth and uniform shape, contributing to providing a soft and silky feel when used in a cosmetic composition. In addition, the spherical silica of the present invention is a stable material that does not include a biodegradable organic material or harmful component, making it an eco-friendly material with minimal skin irritation and a low environmental impact.

The spherical silica particles 100 of the present invention include the core 110 consisting of silica with the plurality of first pores 111 and the shell 120 that surround the core 110 and has the second pores 121 with a different size from the first pores 111. The core 110 and the shell 120 consist of the same silica material, and form a structure in which they are continuously connected toward the center, thereby constituting a single integrated particle. As a result, the overall structural stability of the particles can be secured and a uniform shape can be achieved.

Particularly, the core 110 located in the center has the first pores 111 with an average diameter of 100 nm or less, and the shell 120, which is the outer portion, has the second pores 121 with an average diameter of 50 nm or less. The above-described dual structure in which the pore sizes are compartmentalized can precisely differentiate pore characteristics within a single particle, contributing to enhanced functionality. In addition, by strictly controlling the pore sizes in both regions of the core 110 and the shell 120, the sphericity of the particles may be enhanced, and the overall pore size and density may also be uniformly maintained. As a result, silica particles with smooth surfaces and well-defined shapes are achieved.

This structure enables the gradual adsorption and release of an active ingredient, making it effective in improving the delivery efficiency and lasting power of functional components when used in a cosmetic composition. Particularly, the fine pores formed in the shell 120 can effectively absorb impurities such as sebum and oil, which can contribute to enhanced makeup persistence and shine suppression.

Moreover, the spherical silica particles 100 of the present invention, which exhibit high sphericity and a uniform gradient pore distribution, provide soft and silky spreadability when applied to the skin. Due to minimized friction between particles, there is hardly any rough sensation on the skin, and the particles are evenly distributed over the skin, thereby improving sensory feel. In addition, due to high sphericity, the particles may adhere well to the skin, which results in excellent effects in terms of adhesion and persistence of cosmetic compositions.

Meanwhile, the spherical silica particles 100 of the present invention have a structure in which the pore sizes gradually increase from the shell 120 to the core 110. Due to this structure, at the point where the shell 120 and the core 110 meet, the sizes of the first pores 111 and the second pores 121 are naturally connected, resulting in continuity between pores and a gradual change in pore size. This structure allows an active ingredient to diffuse or be released smoothly from the shell 120 to the core 110, thereby effectively forming a material transport path through the entire particle. Accordingly, delivery efficiency and persistence are further improved, and material transfer resistance is reduced, thereby providing softness while minimizing irritation to the skin.

Meanwhile, the spherical silica particles 100 according to one embodiment of the present invention are configured to adsorb/desorb a material through the pluralities of first and second pores, and a relative pressure to be supplied to the spherical silica particles 100 for adsorption and a relative pressure to be supplied to the spherical silica particles 100 for desorption are set to be different.

That is, the spherical silica particle 100 of the present invention has a dual structure composed of the core 110 and the shell 120, and this structural characteristic has a significant influence on the adsorption and desorption behavior of gases (or liquids). Assuming that a predetermined pressure is applied to the spherical silica particles 100 for adsorption or desorption, the volumes of a gas (or liquid) adsorbed and desorbed at the same relative pressure are different. For example, at the same relative pressure, the volume of the gas (or liquid) adsorbed is smaller than that of the gas (or liquid) desorbed.

This phenomenon is considered to arise from the structure of the spherical silica particles, in which relatively large pores are connected by relatively narrow necks. First, during adsorption, as the relative pressure increases, the gas undergoes capillary condensation within the pores before reaching the necks, and therefore, the pores fill first, followed by the necks. Conversely, during desorption, the size difference between the pores and the necks in the spherical silica 100 causes the ink-bottle effect, requiring a relatively high pressure for desorption.

Here, the neck refers to a narrow pathway connecting one pore to another and the path through which a material can move within the spherical silica particles 100, which is a concept distinct from the pores themselves.

Meanwhile, the spherical silica particles 100 of the present invention are characterized by a gradient structure in which the pore size gradually decreases from the core 110 to the shell 120. Such a gradient pore structure may further reinforce absorption/desorption behavior resulting from the above-described changes in relative pressure. That is, the structure in which the pore size decreases from the core 110 to the shell 120 gradually enhances the ink bottle effect, thereby increasing the asymmetry of the adsorption-desorption pathway. Consequently, the desorption pressure increases, allowing the material to adsorb a gas (or a liquid) for a longer period.

Specifically, the size of the first pore 111 increases as it approaches the center of the core 110. Consequently, when the size of the neck connecting the first pore 111 to adjacent pores 111 and 121 is smaller than that of the pores 111 and 121, a material transfer effect may occur due to the difference in size.

Consequently, in the spherical silica particles 100 of the present invention, pressure hysteresis occurs between the adsorption and desorption of a gas (or liquid), which implies that the adsorption and desorption pathways are different. This hysteresis is particularly accentuated by the size difference between the pores and the neck, the interconnecting structure of the pores, and the spatial arrangement of the pores. As a result, the spherical silica particles 100 do not react sensitively to pressure changes in the external environment and are capable of stably retaining a material therein.

In addition, since the spherical silica particles 100 may have a structure in which the relative pressure required for desorption is greater than that required for adsorption, the gas (or liquid) adsorbed into the pores of the spherical silica particles 100 is released only in response to environmental changes (e.g., drops in temperature/pressure), thereby providing a sustained-release effect.

Meanwhile, the spherical silica according to one embodiment of the present invention may have a tap density of powder, as measured by any one of the methods specified in ASTM B527, ISO 787, and JIS K 5101, ranging from 0.40 to 0.95 g/mL.

When the tap density of the spherical silica falls within the above-mentioned range, the internal pore volume of the particles may increase due to their gradient porous structure, which results in a lower weight per unit volume. Consequently, when the spherical silica is dispersed in the dispersion medium to be described below, interparticle flocculation is suppressed or reduced, allowing for easier dispersion in the dispersion medium.

Meanwhile, in addition to the method described above, a method of measuring a tap density may be any standard test method widely used in the technical field without limitation.

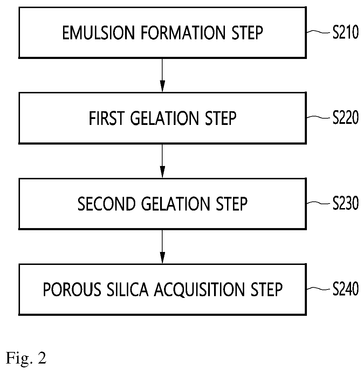

FIG. 2 is a flowchart illustrating a method of manufacturing spherical silica according to one embodiment of the present invention.

Referring to FIG. 2, to manufacture the spherical silica of the present invention, first, an emulsion formation step (S210) for preparing an emulsion containing a silica precursor is performed.

The emulsion formation step (S210) may include a first solution formation step, a second solution formation step, and a mixing step. Each step will be described in detail below.

First, the first solution formation step for forming a first solution by dissolving a nonionic surfactant in an oil is performed.

The first solution formation step is the step of forming a W/O (water-in-oil) emulsion, in which an oil continuous phase is formed and water is present as the dispersed phase.

In the first solution formation step, the oil is a nonpolar solvent and may include one or more compounds selected from kerosene, paraffin oil, diesel, xylene, toluene, hexane, heptane, octane, nonane, decane, undecane, and dodecane.

In the first solution formation step, the nonionic surfactants may include one or more compounds selected from propylene glycol monostearate, sorbitan sesquioleate, glycerol monostearate, sorbitan monooleate, and sorbitan monostearate.

In the step of forming the first solution in the method of manufacturing spherical silica according to one embodiment of the present invention, a nonionic surfactant may be added in a content of 0.5 to 5 wt% based on the total weight of the first solution.

When the concentration of the nonionic surfactant is less than 0.5 wt% during the first solution formation step, as the interfacial tension between the oil and water (or a polar solvent) may not be sufficiently reduced, proper emulsification may not occur during the subsequent emulsion formation step (S210). As a result, droplets within the emulsion may not stably disperse in the oil phase, and phase separation may easily occur over time. In addition, the size of the droplets in the emulsion may increase, and flocculation may occur, causing the emulsion to become unstable. Since the droplets are not stably maintained during the emulsion formation step (S210), the silica precursor may not be uniformly gelated in the subsequent gelation steps (S230 and S240), resulting in an inconsistent pore structure.

In the first solution formation step of the method of manufacturing spherical silica according to one embodiment of the present invention, the nonionic surfactant may have a hydrophile-lipophile balance (HLB) value of 3 to 6.

Here, in the first solution formation step, when the nonionic surfactant has an HLB value of less than 3, the nonionic surfactant may dissolve well in the oil phase, but interacts weakly with water, thereby failing to act effectively at the interface between the oil and water. As a result, the size of the oil droplets increases, and the emulsion may become unstable, leading to phase separation in the emulsion formation step (S210).

On the other hand, in the first solution formation step, when the nonionic surfactant has an HLB value exceeding 6, it may be more readily dissolved in the aqueous phase due to its strong hydrophilicity and may weakly interact with the oil phase, making emulsification difficult. Therefore, a non-uniform distribution of droplets may occur during emulsion formation in the emulsion formation step (S210). Furthermore, ionic interactions with a gelling agent such as sulfuric acid added in the gelation step may interfere with the formation of a silica network.

Following the first solution formation step, a second solution formation step for forming a second solution by dissolving a silica precursor in distilled water is performed.

In the second solution formation step, the silica precursor is an aqueous solution containing an inorganic silica compound, which may include one or more compounds selected from sodium silicate, lithium silicate, potassium silicate, and calcium silicate.

Preferably, in the second solution formation step of the present invention, the silica precursor consists of sodium silicate. In this case, the silica precursor may include sodium oxide and silica in a molar ratio ranging from 1:2 to 1:3.4, and the silica may be included at a content of 5 to 30 wt% based on the total weight of the sodium silicate.

Here, in the second solution formation step, when the sodium silicate includes silica at a content of less than 5 wt%, the surfactant properties of the sodium silicate may be reduced, which can decrease its ability to stably maintain droplets within the emulsion in the emulsion formation step (S210).

Specifically, the surfactant properties of the sodium silicate are determined by the ratio of silica (SiO₂) and sodium oxide (Na₂O). Consequently, when there is a lack of silica, the hydrophilic properties of silica are weakened, which may reduce the ability to stably maintain droplets within the emulsion. As the colloidal properties in the aqueous sodium silicate solution are weakened, coalescence between droplets may readily occur. As a result, the formation of a silica network becomes difficult, leading to structural defects in the subsequent gelation step.

Meanwhile, in the second solution formation step, when the sodium silicate solution includes silica at a content of more than 30 wt%, the viscosity of the sodium silicate aqueous solution may increase sharply, making the emulsification process difficult, and the concentration of the silica precursor increases, which accelerates the gelation reaction rate. This can result in a non-uniform gel structure, making it difficult to form a uniform porous structure. Furthermore, an increase in particle size or flocculation occurring within the emulsion can cause turbidity, thereby affecting the appearance quality of the final product.

After the second solution formation step, a mixing step for mixing the first solution that has been prepared in the first solution formation step and the second solution that has been prepared in the second solution formation step is performed.

In the mixing step, the first and second solutions may be vigorously stirred for 10 to 20 minutes at a constant rotational speed of 200 to 1,000 rpm using a homogenizer.

As described above, in the mixing step, vigorous stirring at a constant speed of 200 to 1,000 rpm for 10 to 20 minutes applies a high shear force to the interface between the oil and aqueous phases, thereby reducing the droplet size to the micrometer (or nanometer) level. In addition, this induces efficient orientation of nonionic surfactants and ensures uniform mixing of the oil and the silica precursor, thereby preventing phase separation and enhancing emulsion stability.

In the emulsion formation step (S210) of the spherical silica manufacturing method, the emulsion may be prepared by mixing oil and silica in a molar ratio ranging from 1:1 to 3:1.

Here, when the oil and silica are mixed in a molar ratio that is outside the above-mentioned molar ratio range (that is, when an excessive amount of oil is mixed), the amount of nonionic surfactant may become relatively insufficient, increasing droplet sizes and causing phase separation. In addition, an excess of oil can dilute the concentration of the silica precursor in the solution, thereby slowing the gelation rate or even hindering gel formation, and may result in a non-uniform pore size and distribution within the porous structure, thereby degrading the physical properties of the final product.

Through the processes described above, an emulsion is formed in the emulsion formation step (S210).

After the emulsion formation step (S210), a first gelation step for treating the emulsion at or below room temperature (S220) is performed.

This is carried out by maintaining the emulsion at a constant temperature in the first gelation step (S220). The step of maintaining the emulsion at a constant temperature may be performed in a state in which the emulsion is introduced into a double-walled reactor. In this case, the constant temperature mentioned above is preferably room temperature or less, and more preferably ranges from 5 to 20 °C.

Afterward, in the first gelation step (S220), a first gelling agent may be added.

The first gelling agent may include one or more compounds selected from ammonium bicarbonate (NH₄HCO₃), sodium bicarbonate (NaHCO₃), potassium bicarbonate (KHCO₃), ammonium carbonate ((NH₄)₂CO₃), sodium carbonate (Na₂CO₃), ammonium sulfate ((NH₄)₂SO₄), sodium sulfate (Na₂SO₄), ammonium nitrate (NH₄NO₃), sodium nitrate (NaNO₃), ammonium chloride (NH₄Cl), sodium chloride (NaCl), potassium chloride (KCl), ammonium phosphate ((NH₄)₃PO₄), nitric acid (HNO₃), hydrochloric acid (HCl), sulfuric acid (H₂SO₄), carbonic acid (H₂CO₃), boric acid (H₃BO₃), phosphoric acid (H₃PO₄), and carbon dioxide (CO₂).

In the first gelation step (S220), the first gelling agent may be input at a rate of 2 to 10 mL/min. By controlling the input rate of the first gelling agent, the thickness of the shell 120 in the spherical silica particle 100 may be determined, and a dense structure of the shell 120 may be formed.

After the first gelling step (S220), a second gelling step for treating the emulsion at room temperature or higher (S230) is performed.

In the second gelation step (S230), a second gelling agent may be added, and the second gelling agent may be composed of the same material as the first gelling agent described in the first gelation step (S220).

In the second gelation step (S230), the second gelling agent may be sulfuric acid, and more preferably a 30% sulfuric acid solution.

In the second gelation step (S230), the aqueous solution obtained in the first gelation step (S220) is maintained under constant temperature conditions. The above-mentioned constant temperature is room temperature or higher, preferably 25 °C or more, and more preferably 30 °C or more.

Accordingly, a shell may be formed in the silica particle.

During the second gelation step (S230), the second gelling agent may be input at 2 to 5 mL/min.

Meanwhile, in the method of manufacturing spherical silica according to one embodiment of the present invention, the secondary gelation step (S230) may include adjusting the pH of the aqueous solution obtained in the first gelation step (S220) to 7.0 or more. For example, the pH of the aqueous solution obtained in the first gelation step (S220) may be adjusted to 8.5. In this case, the step of adjusting the pH to 8.5 may be performed for 30 minutes to 1 hour. As described above, since the secondary gelation step (S230) is performed under alkaline conditions, the condensation rate of the silica particles is adjusted, allowing the formation of uniform pore sizes. In addition, as the hydrolysis of the silica precursor is promoted and silanol (Si-OH) groups are generated, the cross-linking density between silica particles increases, thereby improving mechanical strength.

The method of manufacturing spherical silica according to one embodiment of the present invention is characterized by forming spherical silica particles 100 through the first gelation step (S220) and the second gelation step (S230). In this method, by controlling the gelation conditions of each gelation step, the size and density of the first pores 111 and the second pores 121 may be controlled, thereby enabling the control of the thicknesses of the core 110 and the shell 120.

Specifically, in the first gelation step (S220), the sizes and density of the second pores (121) in the shell 120 may be controlled by controlling the temperature and reaction rate at which gelation occurs. Specifically, the emulsion is introduced into a double-walled reactor and maintained at a temperature of 10°C. Subsequently, when the first gelling agent is introduced at a specific rate, the gelling reaction within the emulsion is gradually promoted, allowing surface reactions to proceed through material transfer between the droplets formed in the emulsion and the first gelling agent introduced into the emulsion. For example, the silica precursor diffuses to the interface of the droplets in the emulsion and forms a silica network through a condensation reaction at the interface, thereby forming a relatively dense shell having second pores 121 of 20 nm or less.

Subsequently, in the second gelation step (S230), the hydrolysis and condensation of the silica precursor are promoted by raising the temperature to room temperature or higher and adjusting the pH, thereby inducing the formation of a pore structure in the core 110, and the pore size may expand to a maximum of 100 nm or less. Meanwhile, the dense shell structure formed in the first gelation step (S220) exhibits high thermal stability, limiting structural deformation even with the temperature increase during the second gelation step (S230). Through this process, spherical silica particles 100 with different pore sizes in the core 110 and shell 120 are formed.

After the second gelation step (S230), a spherical silica acquisition step for obtaining spherical silica (S240) is performed.

The spherical silica acquisition step (S240) involves obtaining spherical silica through heating, holding, solid-liquid separation, neutralization, and washing.

The heating may be performed at 80 to 90 °C, and more preferably, at 85°C.

When the temperature is raised to 85 °C, the condensation reaction of silanol groups remaining on the surface of the silica particles is promoted, thereby maximizing the density of siloxane bonds, and the viscosity of the solution is reduced, thereby providing the effect of enabling subsequent processing (e.g., centrifugation and filtration efficiency) to be performed efficiently.

A holding process may be performed to cool the aqueous solution, preferably, for 12 hours or more.

Subsequently, a solid-liquid separation step may be performed by physically separating the spherical silica particles 100 from the reaction solution.

The liquid-solid separation step described above is a step performed by the separation and centrifugation of the supernatant, and may increase the purity of the spherical silica particles 100 by removing an unreacted precursor, a residual surfactant, or a byproduct from the particles.

Subsequently, a neutralization and washing step may be performed by washing with distilled water, ethanol, or a mixture thereof to adjust the pH and completely removing a reaction byproduct.

Finally, a drying step for drying the spherical silica particles 100 that have undergone the neutralization and washing step may be performed at 80 to 120 °C for 20 to 50 hours.

In the method of manufacturing spherical silica according to one embodiment of the present invention, since the gelation step is performed twice (S230 and S240), a single silica particle having a shell 120 with micropores and a core (110) with mesopores can be obtained. The method of manufacturing spherical silica according to one embodiment of the present invention may not require expensive initial equipment required for conventional dry methods and may overcome the limitation that the entire particle has only a dense structure and thus is difficult to be utilized in cosmetic compositions. Furthermore, while conventional wet methods produce particles with a porous structure but make it difficult to precisely control the pore size or distribution, the method of manufacturing spherical silica of the present invention enables the sequential formation of a core 110 and a shell 120 with different pore sizes through a two-step gelation process. By precisely adjusting the reaction conditions (temperature, pH, time, etc.) during these gelation steps, the ratio of the core 110 and the shell 120 or the sizes of the pores 111 and 121 can be adjusted. Therefore, this method is suitable for manufacturing silica particles tailored to specific purposes. Accordingly, a core 110 containing first pores 111 of 100 nm or less and a shell 120 containing second pores 121 of 50 nm or less are realized within a single particle, and the size distribution and spatial location of the pores may be precisely controlled. Furthermore, since the method of manufacturing spherical silica is based on a wet method, process conditions may be easily controlled, and the production equipment may be scaled up, which provides the advantage of suitability for industrial mass production.

Since the spherical silica particles 100 of the present invention has structural characteristics that allow precise control of the thicknesses of the core 110 and the shell 120, when used in a cosmetic composition, the particles may effectively adjust the balance of oil and moisture in the skin. Specifically, the core 110 containing first pores 111 of 10 nm or less may absorb and store moisturizing ingredients (e.g., glycerin and hyaluronic acid) through relatively large pores, thereby providing a sustained moisturizing effect that supplies moisture to the skin over a long time. Conversely, the shell 120 with second pores 121 of 50 nm or less may selectively adsorb a low-molecular-weight material such as sebum or an oil component due to its smaller pore structure, which is effective in reducing skin shine. This dual pore structure enables a selective regulation mechanism that retains a moisturizing ingredient while adsorbing only excess oil, ultimately contributing to the stable maintenance of the skin's oil-water balance. In addition, since the thicknesses of the core 110 and the shell 120 may be designed according to the product's use or skin type, this structure can be applied to a wide range of cosmetic products, such as those for oily or combination skin.

Next, a silica dispersion including the spherical silica according to one embodiment of the present invention will be described in detail.

The silica dispersion of the present invention is a dispersion system applicable to compositions such as cosmetics, inks, coatings, and adhesives, and is a silica dispersion which, even when the spherical silica particles are dispersed at high concentration in the continuous phase, suppresses precipitation and phase separation, and thus allows a formulation having a predetermined viscosity range to be realized depending on the application field.

Specifically, the silica dispersion of the present invention includes spherical silica and a dispersion medium.

The spherical silica of the present invention is the key component for securing excellent dispersion stability in a dispersion with a high solid concentration, and a powder-type material including silica particles having fine particle sizes ranging from hundreds of nanometers (nm) to tens of micrometers (µm).

Meanwhile, "high concentration" used herein may refer to a case where the solid concentration, based on the silica dispersion, is at or above a level at which dispersion stability issues typically arise, for example, 10 wt% or more. In addition, "medium concentration" may refer to a case where the solid concentration, based on the silica dispersion, is 3 to 7 wt%. Furthermore, "low concentration" may refer to a case where the solid concentration, based on the silica dispersion, is less than 3 wt%.

The spherical silica may be used as a dispersed phase that can be individually separated and distributed within a continuous phase.

The spherical silica of the present invention is a single particle having a core-shell structure with gradient porosity.

Since the spherical silica of the present invention is substantially identical to the spherical silica described earlier with reference to FIG. 1, a detailed description thereof is omitted.

The dispersion medium of the present invention may be a medium that induces a uniform dispersion system in which the individual particles constituting the spherical silica are separated and distributed individually, without causing precipitation, phase separation, or interparticle bridging and flocculation of the spherical silica, which is the dispersed phase, within the medium.

The dispersion medium of the present invention may be a continuous phase in which the dispersed phase, spherical silica, is present, and is preferably a medium in a liquid state.

First, the dispersion medium, as a liquid continuous phase, may correspond to either an oil phase containing an oil-soluble component or a water phase containing a water-soluble component, but the type of liquid medium is not limited thereto.

Silica dispersions may be implemented as either a single dispersion system or a multiple dispersion system.

Meanwhile, when the dispersion medium consists of an oil phase, the dispersion medium may include at least one of a hydrocarbon-based oil, an ester-based oil, a vegetable oil, and a silicone-based oil.

Meanwhile, the silica dispersion of the present invention may be composed of spherical silica dispersed in the dispersion medium at a concentration of 10 to 20 wt% based on solid content.

The concentration is preferably 15 wt%, and more preferably, 20 wt%.

When the spherical silica content in the dispersion medium exceeds 20 wt%, the concentration of spherical silica particles is excessive, there is a risk of gelation or a sudden increase in viscosity. In other words, since the silica dispersion of the present invention includes spherical silica in the dispersion medium within the appropriate range described above, a plurality of spherical silica particles do not flocculate with each other in the dispersion medium, thereby obtaining a silica dispersion with excellent dispersion stability.

Next, the method of preparing a silica dispersion according to one embodiment of the present invention will be described.

First, a step of mixing the spherical silica acquired by the method of manufacturing spherical silica of the present invention in a dispersion medium is performed.

Next, to uniformly disperse the spherical silica in the mixture without flocculation, a step of preparing the mixture into a silica dispersion using at least one method selected from the group consisting of sonication, high-power stirring, and high-shear agitation is performed.

Finally, a step of subjecting the obtained silica dispersion to a vacuum to remove bubbles is performed.

The step of removing bubbles may be performed by transferring the silica dispersion to a vacuum oven to degas it under vacuum, but the present invention is not limited thereto.

Subsequently, a method of measuring the TSI of the silica dispersion according to one embodiment of the present invention will be described in detail.

The TSI is a dimensionless index calculated by comprehensively reflecting the changes in the backscattering intensity (BS) or transmission (T) signal in the time and height directions within a selected height range, obtained from measurements using a Turbiscan instrument, and is represented by summarizing the overall progression of physical instability phenomena, such as sedimentation, creaming, flocculation, and coalescence, detectable through changes in BS/T signals into a single numerical value.

TSI makes it possible to quantitatively compare changes in dispersion stability among a plurality of samples under the same measurement conditions and the same reference time, and thus can be used to determine the relative superiority or inferiority of dispersion stability for each sample.

TSI may be measured using any of the common Turbiscan instruments, such as Turbiscan LAB, Turbiscan Tower, Turbiscan AGS, or Turbiscan Classic, but the present invention is not limited thereto.

To measure the TSI of the silica dispersion according to one embodiment of the present invention, for example, the following method may be applied.

The silica dispersion sample is loaded into a measurement cell to the specified height, preferably, approximately 55 mm or less.

Subsequently, using a Turbiscan instrument, the sample is irradiated with near infrared (NIR) light according to the set experimental conditions, and the corresponding BS and T signals are simultaneously detected.

Although the experimental conditions may vary depending on the characteristics and composition of the sample to be measured, in one embodiment, the vertical resolution is approximately 40 µm, the time required for a single scan is approximately 20 seconds, and the scan interval is approximately 30 minutes, and the total number of scans may be set to multiple times, for example, tens to hundreds of times.

In this case, the measurement temperature is preferably approximately 25 °C or more, and the measurement time may be 2 hours or more.

In the BS/T profiles derived from the TSI measurement method described above, the x-axis represents the height (H) of the measurement cell, and the y-axis represents signal strength, expressed as BS (%) or T (%).

"Profile" used herein refers to the distribution curve of the BS or T signal along the height direction of the measurement cell.

Meanwhile, since the silica dispersion according to one embodiment of the present invention includes the dispersed phase in the dispersion medium at a concentration of 10 to 20 wt% based on solid content, it corresponds to a relatively high-concentration sample. Consequently, the T profile measured based on the T signal may approach 0% across the entire height range.

Therefore, the T profile measured based on the T signal may approach 0% in most height ranges, excluding the meniscus.

Specifically, for the T profile of a silica dispersion, the scan profiles measured multiple times for the area excluding the meniscus may be 1% or less relative to T.

"Meniscus" used herein refers to the curved surface formed by surface tension at the upper boundary where the sample contacts air within the measurement cell, and denotes the region where distortion of the light scattering signal is likely to occur during Turbiscan measurement.

Accordingly, in one embodiment of the present invention, the meniscus region may be excluded from the height range subject to analysis when calculating the TSI.

In this case, the TSI may be calculated based on the following mathematical expression. [Mathematical expression 1] ${d}_{i} = \frac{{\sum }_{b} \left|{scan}_{i}\left(h\right)-{scan}_{i - 1}\left(h\right)\right|}{H}$

Here, dᵢ is the value obtained by summing the absolute value of the signal difference between the i-th scan profile Scanᵢ(h) and the (i-1)-th scan profile Scanᵢ₋₁(h) at each position h in the height direction of the measurement cell over the entire height range.

In addition, H represents the total height (mm) of the measurement cell, i denotes the scan number, and h denotes the vertical position variable from the bottom to the top inside the measurement cell.

Furthermore, Scanᵢ(h) represents the signal value measured at the i-th scan point at the height h within the measurement cell, which may be BS (%) or T (%).

In other words, TSI may be defined as a value calculated by accumulating, over the sample height, the signal differences between two successive scan profiles measured at time intervals according to changes in the dispersion stability of a sample, and an increase in the TSI value indicates that destabilization phenomena such as sedimentation, suspension, and flocculation are progressing within the sample.

In the silica dispersion according to the present invention, the TSI measured at 25 °C using a Turbiscan instrument may be, for example, 0.30 or less, and preferably 0.25 or less.

When the TSI of the silica dispersion falls within the above-mentioned range, the silica dispersion of the present invention may be evaluated as having excellent long-term dispersion stability.

In other words, even when the silica dispersion according to one embodiment of the present invention contains spherical silica at a high concentration, the sedimentation of the spherical silica can be effectively suppressed during long-term storage by maintaining the TSI value at 0.30 or less. In addition, even when some precipitation or phase separation occurs, the silica dispersion may exhibit the characteristic of being easily redispersed by a certain level of external force.

As described above, the silica dispersion according to one embodiment of the present invention is configured to include spherical silica in the dispersion medium at a concentration of 10 to 20 wt% based on solid content.

Due to the above-mentioned structural features, the spherical silica included in the silica dispersion at a high concentration may more uniformly exhibit its inherent functions, such as improving texture, imparting optical properties, and controlling viscosity, in the silica dispersion without flocculation or precipitation.

For example, when the silica dispersion of the present invention is used in a cosmetic composition, smooth and silky spreadability on the skin may be provided, and adhesion and persistence may also be improved.

In addition, when the silica dispersion of the present invention is used in an ink composition, the solid content may increase due to dense packing, and the rheological properties and dispersion stability of the ink can be improved because the spherical silica is uniformly dispersed without flocculation or precipitation.

Furthermore, when the silica dispersion of the present invention is used in an adhesive, the filling rate may increase, and thermal stability and heat resistance may be simultaneously improved.

Meanwhile, as described above, the silica dispersion according to one embodiment of the present invention includes spherical silica, and the spherical silica of the present invention includes a core and a shell having different pore structures, and a tap density, as measured by any one method of ASTM B527, ISO 787, and JIS K 5101, is controlled within a range of 0.40 to 0.95 g/mL.

Due to the above-mentioned technical features, the TSI value may be maintained at a low level of 0.30 or less even at a high solid concentration, and as a result, the spherical silica may tend to remain stably suspended in the dispersion medium.

Particularly, as the tap density of the spherical silica is controlled within the range of 0.40 to 0.95 g/mL, the phenomenon in which individual particles exhibit different sedimentation behaviors due to gravity within the dispersion medium is reduced. Therefore, excessive sedimentation or floating may not occur within the dispersion medium, and the behavior of the particles may be smoothly maintained. As a result, a stable dispersion state may be induced from the initial stage of dispersion system formation in the dispersion medium.

Furthermore, since high-power or high-shear agitation is applied during the dispersion process of the silica dispersion of the present invention, the relative positions and orientations of the spherical silica particles within the dispersion system may continuously change. As a result, it becomes difficult to stably form mechanical interlocking between the particles, and the effect of further suppressing bridging and flocculation within the dispersion system may be expected.

Meanwhile, the silica dispersion according to one embodiment of the present invention has a TSI, measured at 25°C using a Turbiscan device, of, for example, 0.30 or less.

Due to the structural features described above, the silica dispersion of the present invention exhibits relatively little changes in viscosity and appearance even during long-term storage or use.

Specifically, when spherical silica is dispersed in a liquid medium, the phenomenon of excessive amplification of interparticle interactions may be suppressed. Accordingly, interparticular bridging and flocculation in the dispersion medium are reduced, and excellent dispersion stability may be exhibited without phase separation or sedimentation.

In addition, even when some flocculation occurs during use, it tends to be relatively easy to redisperse, so changes in viscosity and appearance may be relatively minimal even during long-term storage or use.

Furthermore, as both the tap density of the spherical silica and the TSI value of the silica dispersion according to one embodiment of the present invention are limited to specific values, the stability of the dispersion may be quantitatively defined, thereby providing the advantage of effectively managing batch-to-batch variations in terms of production and quality control.

For example, since the TSI index presented in the present invention enables quantitative interpretation of changes in dispersion stability over time, it can be used as a reliability analysis index to predict the potential for quality deterioration, such as future quality deterioration, and to support design modifications or redesigns, making it useful for quality control over time.

Hereinafter, the advantages of the spherical silica of the present invention and the silica dispersion including the same will be described in further detail through examples.

### <Manufacturing Example - Manufacture of spherical silica particles>

First, spherical silica particles were manufactured to comparatively evaluate the porosity characteristics of the spherical silica particles of the present invention.

### Manufacturing Example 1. Manufacture of spherical silica

Spherical silica according to Manufacturing Example 1 was manufactured as follows.

Specifically, 241.29 g of kerosene was used as an oil for a first solution.

As a nonionic surfactant for the first solution, 2.65 g of sorbitan monooleate was used.

The first solution was prepared by adding the prepared raw materials, and stirring.

Sodium silicate was used as a silica precursor for a second solution.

The second solution was prepared by stirring the sodium silicate mixed with 250 g of distilled water such that the silica concentration of the sodium silicate was 10 wt%.

An emulsion was prepared by mixing the first solution and the second solution prepared above, and stirring the resulting mixture at 600 rpm for 20 minutes using a homogenizer.

At a temperature of 10 °C, a first gelling agent was added to the emulsion dropwise at 10 mL/min.

The first gelling agent was prepared by adding 19.82 g of ammonium sulfate to 300 g of distilled water, and stirring.

Subsequently, the reaction solution obtained in the first gelation step was maintained at 35 °C, and a second gelling agent was added dropwise at 5 mL/min until the reaction solution reached a pH of 8.5.

As the second gelling agent, a 30% sulfuric acid solution was used.

The reaction solution obtained in the second gelation step was aged for 1 hour, then heated to 85°C to terminate the gelation.

The reaction solution was cooled for 12 hours, the kerosene in the supernatant was separated, and the solid-liquid separation was performed by centrifugation following a neutralization process. After washing twice, the slurry obtained from the final centrifugation was dried at 105°C for 48 hours to obtain a spherical silica powder of Manufacturing Example 1.

### Manufacturing Example 2. Manufacture of spherical silica

Spherical silica according to Manufacturing Example 2 was manufactured using the same raw materials and the same manufacturing method as in Example 1.

Specifically, a first solution was prepared in the same manner as in Manufacturing Example 1, while a second solution was prepared by adjusting a silica concentration of sodium silicate to 15 wt%.

The step of forming an emulsion was performed using the same method as in Manufacturing Example 1.

A first gelling agent was added dropwise to the emulsion at 2 mL/min under the same temperature condition as Manufacturing Example 1.

The first gelling agent was prepared by adding 23.79 g of ammonium sulfate to 300 g of distilled water, and stirring.

Subsequently, the reaction solution obtained from the first gelation step was maintained at 10°C, and a second gelling agent was added at 2 mL/min such that the reaction solution had a pH of 8.5.

As the second gelling agent, the second gelling agent used was the same as in Manufacturing Example 1.

From the second gelation step, the same processes as in Manufacturing Example 1 were performed.

A spherical silica powder of Manufacturing Example 2 was manufactured by the method described above.

### Comparative Example 1. Porous spherical silica manufactured by wet method

A commercially available spherical silica powder with a porous structure and manufactured using a conventional wet method, was used.

### Comparative Example 2: Porous spherical silica manufactured by dry method

A commercially available spherical silica powder with a dense structure and manufactured using a conventional dry method (melt-spray method), was used.

### Comparative Example 3. PMMA powder manufactured by organic powder method

A commercially available spherical polymethylmethacrylate (PMMA) powder with a dense structure and manufactured by an organic powder method, was used.

### <Experimental Example 1 - Comparison of pore structure according to method of manufacturing spherical silica>

To observe the porous structure of the cross-section of the spherical silica particles in each spherical silica powder, the morphologies of Manufacturing Examples 1 and 2 and Comparative Example 2 were compared and analyzed using a field-emission scanning electron microscope (FE-SEM).

In addition, the morphologies of Manufacturing Example 1 and Comparative Example 1 were compared and analyzed using a transmission electron microscope (TEM).

Meanwhile, to observe the cross-sectional structure of the spherical silica particles, each sample was processed and cut using a focused ion beam (FIB), and its cross-sectional structure was imaged.

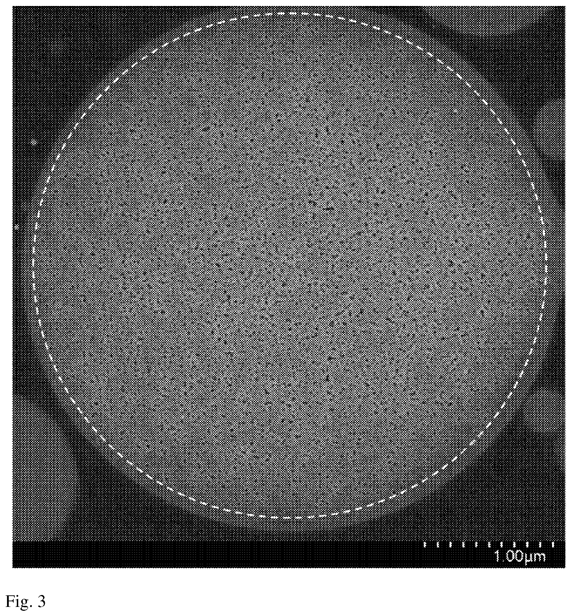

The resulting images are shown in FIGs. 3 to 7.

FIG. 3 is an FE-SEM image of the cross-section of spherical silica particles according to Manufacturing Example 1 of the present invention.

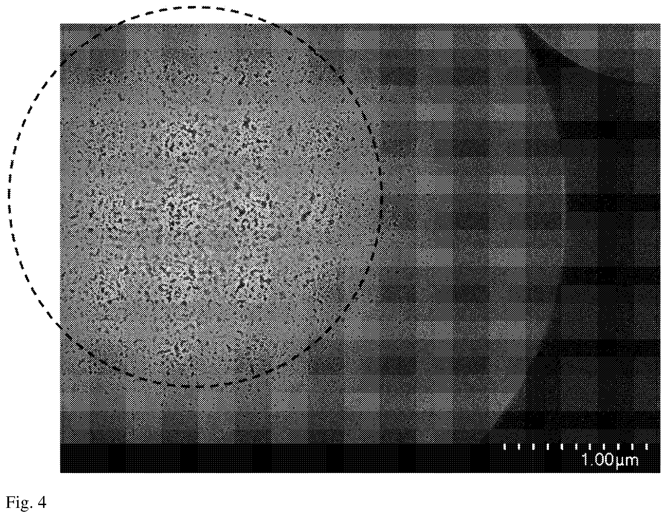

FIG. 4 is an FE-SEM image of the cross-section of spherical silica particles according to Manufacturing Example 2 of the present invention.

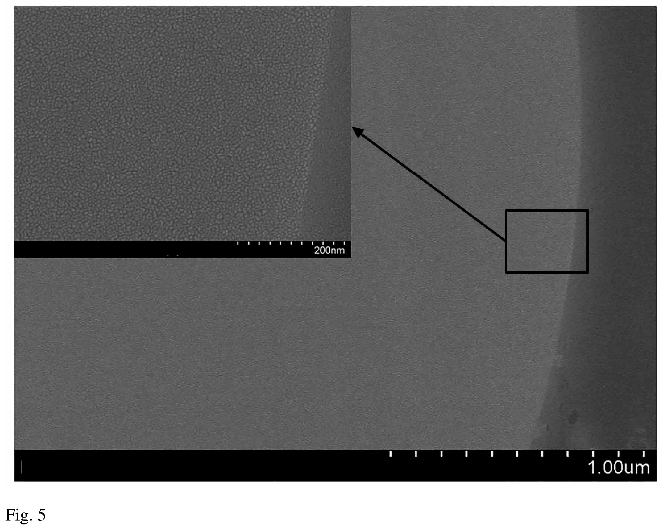

FIG. 5 is an FE-SEM image of the cross-section of silica particles according to Comparative Example 2 of the present invention.

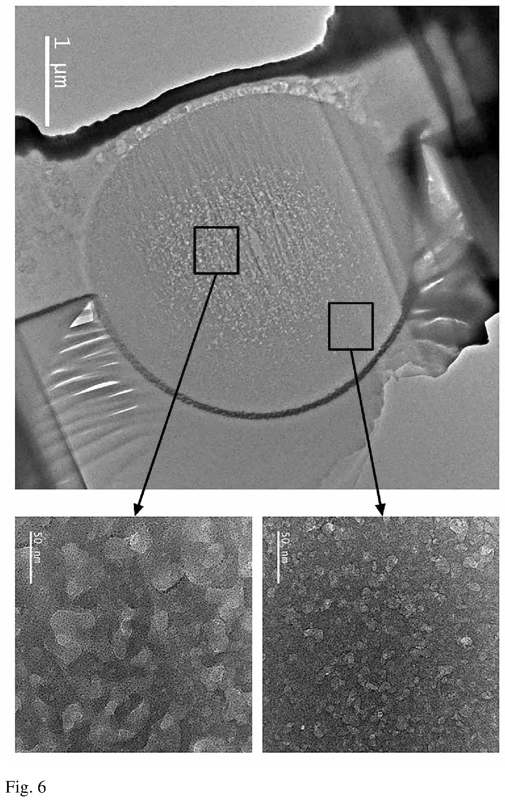

FIG. 6 is a TEM image of the cross-section of the spherical silica particles according to Manufacturing Example 1 of the present invention.

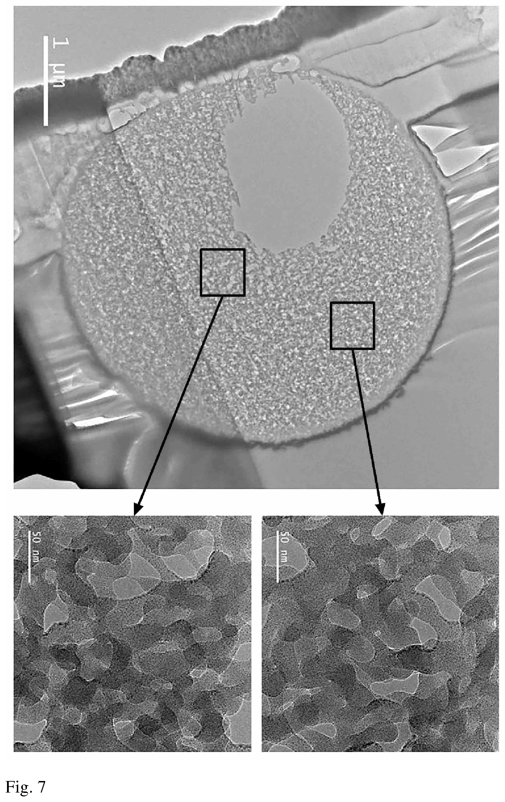

FIG. 7 is a TEM image of the cross-section of spherical silica particles according to Comparative Example 1 of the present invention.

Referring to FIGs. 3, 4, and 6, for both the spherical silica particles of Manufacturing Example 1, which have a narrow shell region, and those of Manufacturing Example 2, which have a wide shell region, it can be confirmed that, when approaching the center of the core region, the pore size increased to 50 nm, and when approaching the outermost surface of the shell region, the pore size decreased to 5 nm. Accordingly, it can be confirmed that the size of a first pore in the core region was 100 nm or less, and the size of a second pore in the shell region was 20 nm or less.

Particularly, it can be seen that the pore size gradually decreases from the core to the shell.

Meanwhile, referring to FIG. 6, it can be confirmed that, in the cross-section of the spherical silica particles according to Manufacturing Example 1, as described above, the closer to the center of the core region, the larger the pore size, and the closer to the outermost surface of the shell, the smaller the pore size, so that, unlike the core, the shell has a relatively dense structure.

On the other hand, as shown in FIG. 7, it can be confirmed that, in the cross-section of the silica particles according to Comparative Example 1, pores with a size of approximately 100 nm, are densely distributed from the center to the outermost surface of the particles, and the particles do not have a core-shell structure, including a gradient porous structure, like those according Manufacturing Example 1 or Manufacturing Example 2.

Furthermore, as shown in FIG. 5, it can be confirmed that the cross-section of the silica particles prepared according to Comparative Example 2 has almost no pores overall, or has only small pores, and thus like Comparative Example 1, the particles do not have a gradient porous structure and a core-shell structure.

### <Experimental Example 2 - Comparison of particle size distribution and oil absorption capacity according to method of manufacturing spherical silica>

Particle size distribution analysis (PSA) and oil absorption capacity analysis (OA) were performed to compare the physical properties of Manufacturing Examples 1 and 2 and Comparative Examples 1 to 3.

[Table 1] shows the measured values of particle size distribution analysis (PSA) and oil absorption analysis (OA) for spherical silica prepared according to Manufacturing Examples 1 and 2 and Comparative Examples 1 to 3.

**[Table 1]**

| | **Manufacturing Example 1** | **Manufacturing Example 2** | **Comparative Example 1** | **Comparative Example 2** | **Comparative Example 3** |
|---|---|---|---|---|---|
| **Composition** | SiO₂ | SiO₂ | SiO₂ | SiO₂ | PMMA |
| **Manufacturing method** | Wet method | Wet method | Wet method | Dry method | - |
| **Particle size distribution (D50, um)** | 4.26 | 4.71 | 4.89 | 4.08 | 5.68 |
| **Oil absorption capacity (mL/g)** | 0.49 | 0.38 | 1.37 | 0.24 | 0.46 |

Referring to Table 1, it can be confirmed that the average particle sizes for Manufacturing Examples 1 and 2 and Comparative Examples 1 to 3 are all within the range of 4 to 6 µm.

Meanwhile, it can be confirmed that the spherical silica in Manufacturing Examples 1 and 2 exhibit a lower oil absorption capacity than Comparative Example 1, which was manufactured using the conventional wet method, thereby confirming that they exhibit an overall denser pore structure compared to that manufactured by a wet method. In addition, it is confirmed that the oil absorption amounts of Manufacturing Examples 1 and 2 have a difference in oil absorption capacity of ±0.25, compared to that of Comparative Example 2 manufactured by a conventional dry method. Accordingly, it is considered that the spherical silica according to Manufacturing Examples 1 and 2 may provide oil absorption characteristics similar to that manufactured by a conventional dry method, while also offering the advantage of lower production costs by being manufactured using only a wet method.

Meanwhile, it can be confirmed that the spherical silica of Manufacturing Examples 1 and 2 exhibit a difference in oil absorption amount of ±0.08, compared to the conventional PMMA organic beads, thereby providing oil absorption characteristics similar to PMMA when applied to a cosmetic composition.

### <Experimental Example 3 - Comparison of pore distribution and surface properties according to method of manufacturing spherical silica>

BET analysis was performed to compare the pore distribution of the spherical silica of Manufacturing Examples 1 and 2, and Comparative Examples 1 and 2. The results are shown in Table 2 below.

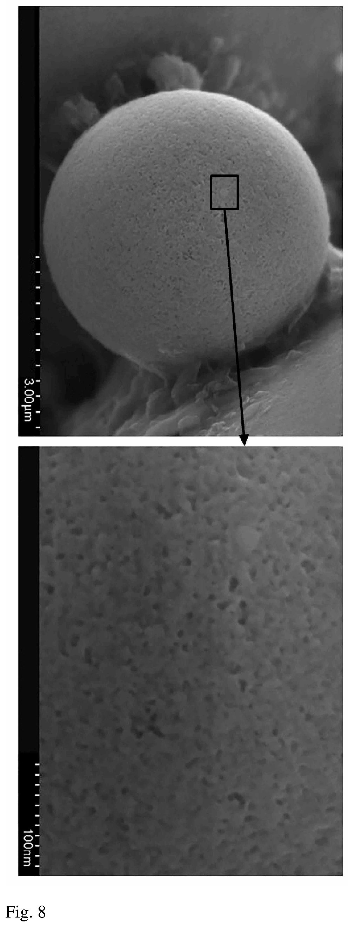

In addition, the surface of the spherical silica particles of Manufacturing Example 1 was imaged using an FE-SEM. The results are shown in FIG. 8.

**[Table 2]**

| | **Manufacturing Example 1** | **Manufacturing Example 2** | **Comparative Example 1** | **Comparative Example 2** | **Comparative Example 3** |
|---|---|---|---|---|---|
| **Composition** | SiO₂ | SiO₂ | SiO₂ | SiO₂ | PMMA |
| **Manufacturing method** | Wet method | Wet method | Wet method | Dry method | - |
| **Specific surface area (m²/g)** | 30.8 | 23.5 | 114.0 | 11.0 | 24.3 |

Referring to Table 2, it can be confirmed that the specific surface area of the spherical silica powder according to Manufacturing Examples 1 and 2 is significantly smaller than that of the silica powder in Comparative Example 1, which is manufactured by a wet method.

FIG. 8 is an FE-SEM image of the surface of the spherical silica particles according to Manufacturing Example 1 of the present invention.

As can be seen in FIG. 8, it can be confirmed that the pores on the shell surface of the spherical silica particles of Manufacturing Example 1 are very small, indicating that the spherical silica according to Manufacturing Example 1 has a lower specific surface area than that of Comparative Example 1 manufactured by a wet method.

Meanwhile, as confirmed in Table 1, the spherical silica particles according to Manufacturing Examples 1 and 2 have a lower oil absorption capacity than those of Comparative Example 1, which is consistent with the BET analysis results shown in Table 2.

Meanwhile, it can be confirmed that the specific surface areas of the spherical silica powders of Manufacturing Examples 1 and 2are similar to those of the silica powder of Comparative Example 2 and the PMMA powder of Comparative Example 3, which were manufactured by dry methods. Accordingly, it can be seen that the spherical silica powders of Manufacturing Examples 1 and 2 are sufficient to replace silica powders and PMMA powders manufactured by conventional wet and dry methods.

### <Experimental Example 4 - Comparison of adsorption and desorption properties of spherical silica>

To comparatively evaluate the changes in adsorption-desorption characteristics based on the pore characteristics of the spherical silica particles according to the embodiments of the present invention, adsorption-desorption isotherms were measured.

In addition, to comparatively evaluate the changes in adsorption-desorption characteristics based on the pore characteristics of the spherical silica particles according to the comparative examples, adsorption-desorption isotherms were measured.

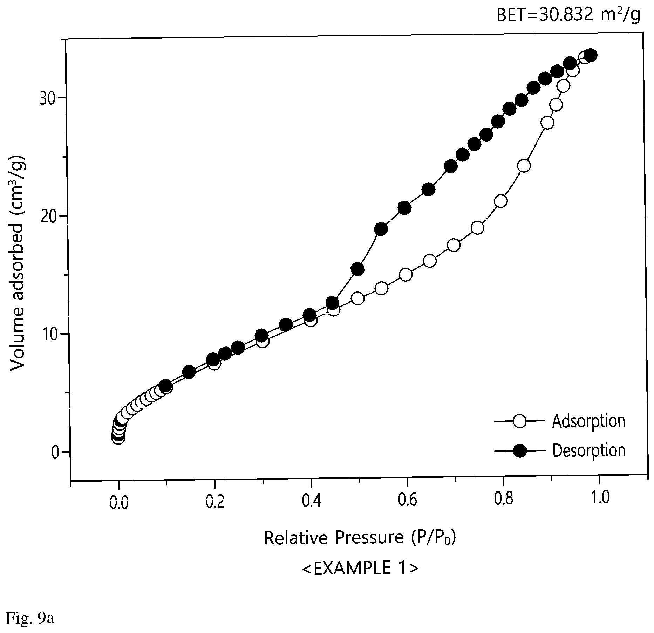

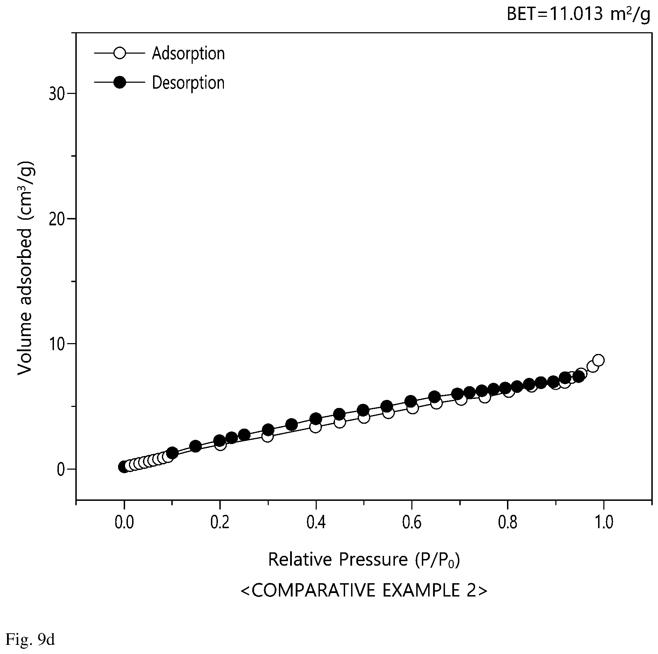

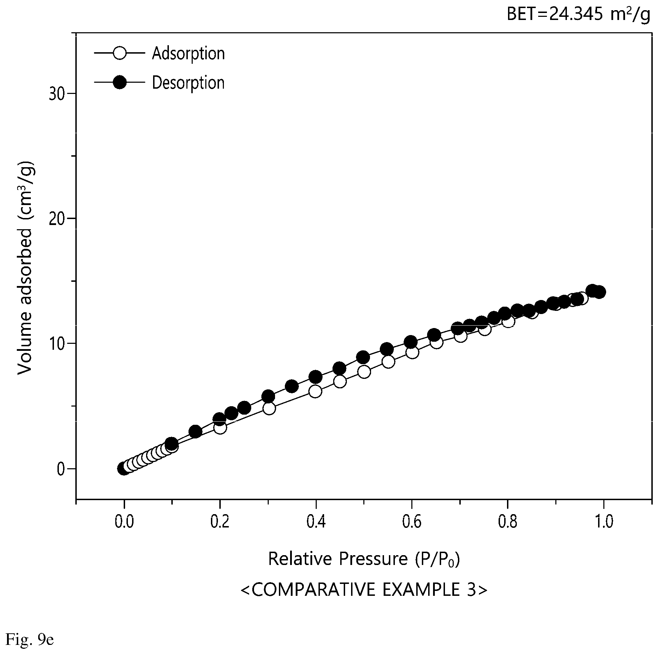

The adsorption and desorption characteristics were evaluated using nitrogen gas on the powders manufactured according to Manufacturing Examples 1 and 2 and Comparative Examples 1 to 3. The results are shown in FIGs. 9A to 9E.

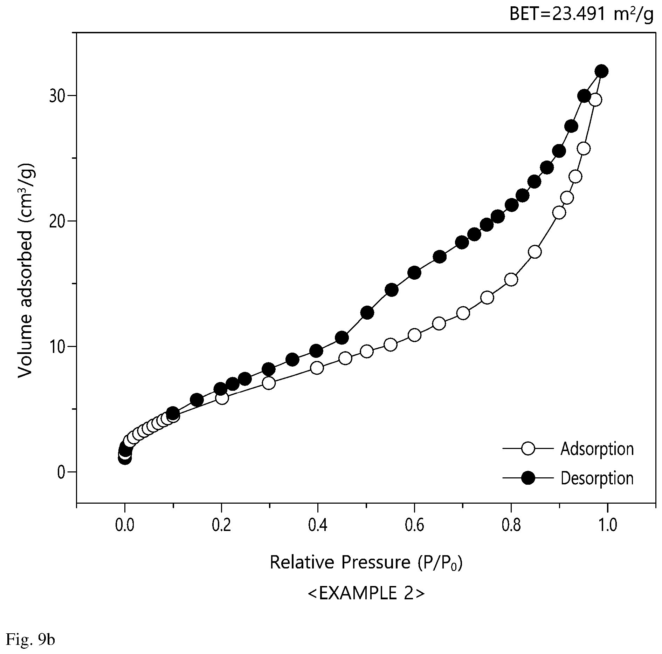

FIGs. 9A and 9B are nitrogen adsorption/desorption isotherm curves for the spherical silica particles according to Manufacturing Examples 1 and 2 of the present invention.

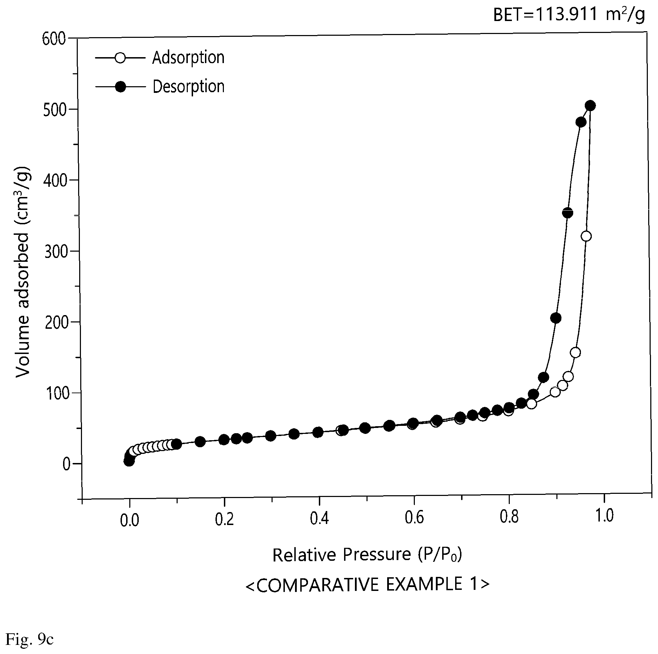

FIGs. 9C to 9E are nitrogen adsorption/desorption isotherm curves for the silica particles according to Comparative Examples 1 to 3 of the present invention.

Referring to FIGs. 9A and 9B, it can be confirmed that the nitrogen adsorption-desorption isotherms for Manufacturing Examples 1 and 2 exhibit a broad and long hysteresis loop at a relative pressure of 0.45 or more.

Referring to FIGs. 9C to 9E, it can be confirmed that the silica according to Comparative Examples 1 and 2 and the PMMA organic beads according to Comparative Example 3 exhibit a relatively small hysteresis loop in their nitrogen adsorption/desorption isotherms at a relative pressure of 0.9 or more.

Accordingly, it can be confirmed that it can be confirmed that the spherical silica particles according to Manufacturing Examples 1 and 2 exhibit a large hysteresis loop on the nitrogen adsorption-desorption isotherms within a specific relative pressure range. This characteristic can be explained by the ink bottle effect observed on the nitrogen isotherm, which arises from a continuous and gradual change in pore structure from the large pore distribution in the core to the small pores in the shell. Therefore, it can be seen that the spherical silica powders of Manufacturing Examples 1 and 2 can fully replace silica powders and PMMA powders manufactured by conventional wet and dry methods.

### <Preparation Example - Preparation of a cosmetic composition containing spherical silica particles>

The spherical silica of the present invention has the advantage of excellent sensory feel and adhesion. To verify this, a cosmetic composition containing the spherical silica of the present invention was prepared.

Using the silica particles and organic beads (PMMA) according to Manufacturing Examples 1 and 2 and Comparative Examples 1 to 3 of the present invention, powder-type foundation cosmetic compositions were prepared with the compositions shown in Table 3 below.

**[Table 3]**

| | **Preparation Example 2.1** | **Preparation Example 2.2** | **Comparative Example 2.1** | **Comparative Example 2.2** | **Comparative Example 2.3** |
|---|---|---|---|---|---|
| **1. Talc** | 92.28 | 92.28 | 92.28 | 92.28 | 92.28 |
| **2. Spherical silica of Manufacturing Example 1** | 5.00 | - | - | - | - |
| **3. Spherical silica of Manufacturing Example 2** | - | 5.00 | - | - | - |
| **4. Silica of Comparative Example 1** | - | - | 5.00 | - | - |
| **5. Silica of Comparative Example 2** | - | - | - | 5.00 | - |
| **6. PMMA of Comparative Example 3** | - | - | - | - | 5.00 |
| **7. Titanium dioxide** | 0.95 | 0.95 | 0.95 | 0.95 | 0.95 |
| **8. Hexyl laurate** | 0.60 | 0.60 | 0.60 | 0.60 | 0.60 |
| **9. Magnesium stearate** | 0.30 | 0.30 | 0.30 | 0.30 | 0.30 |
| **10. Yellow iron oxide** | 0.28 | 0.28 | 0.28 | 0.28 | 0.28 |
| **11. Phenoxy ethanol** | 0.20 | 0.20 | 0.20 | 0.20 | 0.20 |
| **12. Mica** | 0.14 | 0.14 | 0.14 | 0.14 | 0.14 |
| **13. Caprylic/capric triglyceride** | 0.10 | 0.10 | 0.10 | 0.10 | 0.10 |
| **14. Red iron oxide** | 0.07 | 0.07 | 0.07 | 0.07 | 0.07 |
| **15. Triethoxycaprylylsilane** | 0.05 | 0.05 | 0.05 | 0.05 | 0.05 |
| **16. Aluminum hydroxide oxide** | 0.02 | 0.02 | 0.02 | 0.02 | 0.02 |
| **17. Nylon-12** | 0.01 | 0.01 | 0.01 | 0.01 | 0.01 |
| **18. Black iron oxide** | 0.01 | 0.01 | 0.01 | 0.01 | 0.01 |

### <Experimental Example 5 - Sensory evaluation of cosmetic composition>

To compare the sensory feel and skin adherence of the cosmetic compositions according to Preparation Examples 2.1 and 2.2 and Comparative Examples 2.1 to 2.3, a sensory evaluation was conducted as follows:

First, 10 female and 10 male subjects in their 20s to 40s were selected as sensory evaluation participants. The participants were asked to apply Preparation Examples 2.1 and 2.2 and Comparative Examples 2.1 to 2.3 directly to their skin, and then a sensory evaluation was conducted by assigning scores from 1 to 5 based on how good the adhesion and sensory feel were. Subsequently, the average value of each score was calculated to determine the final sensory evaluation score.

Here, adhesion refers to how well the foundation adheres to the skin, that is, its adhesion, and indicates the extent to which the product is applied to the skin surface without gaps and remains in place for a long time.

The above-described sensory feel refers to the instantaneous sensation perceived when the cosmetic composition is applied to the face, and represents the softness, spreadability, and tactile sensation at the moment of contact with the skin when a small amount of the formulation is spread.

The results are shown in Table 4 below.

**[Table 4]**

| **Evaluatio n item** | **Preparation Example 2.1** | **Preparation Example 2.2** | **Comparative Example 2.1** | **Comparative Example 2.2** | **Comparative Example 2.3** |
|---|---|---|---|---|---|
| **Adhesion *** | 4 | 5 | 2 | 3 | 4 |
| **Sensory feel*** | 5 | 4 | 2 | 3 | 4 |
| **Overall score** | 9 | 9 | 4 | 6 | 8 |

Referring to Table 4, it can be seen that the overall scores for Preparation Examples 2.1 and 2.2are higher than those of Comparative Examples 2.1 and 2.2. Particularly, it can be confirmed that the cosmetic compositions according to Preparation Examples 2.1 and 2.2 provided higher sensory feel than the cosmetic composition according to Comparative Example 2.2 containing the silica particles manufactured by a dry method. In addition, the cosmetic compositions according to the preparation examples have higher overall scores than those of the cosmetic composition according to Comparative Example 2.3 containing the PMMA organic beads, indicating that the spherical silica particles according to Manufacturing Examples 1 and 2 can fully replace the PMMA organic beads according to Comparative Example 3.

### <Preparation Example - Preparation of silica dispersion>

Next, to prepare a silica dispersion according to one embodiment of the present invention, a silica dispersion was prepared using the spherical silica of the present invention described above.

Specifically, the spherical silica powders according to Manufacturing Examples 1 and 2 and Comparative Examples 1 and 2 of the present invention were each mixed into a dispersion medium at a concentration of 20 wt% based on solid content.

Here, diisostearyl malate (DIS), which is an ester-based oil, was used as the dispersion medium.

In other words, the spherical silica powders according to Manufacturing Examples 1 and 2 and Comparative Examples 1 and 2 were each dispersed in DIS at a concentration of 20 wt% under the same conditions, and then the resulting mixtures were subjected to high shear agitation, thereby preparing a silica dispersion in which spherical silica is uniformly dispersed within the dispersion medium.

Here, prior to the Turbiscan measurement, the silica dispersion was agitated at a speed of 3,000 rpm or more for at least one minute to ensure sufficient dispersion until no residual powder was visually observed on the bottom of the dispersion preparation container.

Finally, bubbles were removed from the homogenized silica dispersion.

Meanwhile, the above-described preparation methods and conditions were summarized in Table 5 below.

**[Table 5]**

| **Condition** | **Preparation Example 3.1** | **Preparation Example 3.2** | **Comparative Example 3.1** | **Comparative Example 3.2** |
|---|---|---|---|---|
| **Solid concentration** | 20 wt% | | | |
| **Type of dispersed phase** | Manufacturing Example 1 | Manufacturing Example 2 | Comparative Example 1 | Comparative Example 2 |
| **Manufacturing method** | Wet method | Wet method | Wet method | Dry method |

### <Experimental Example 6 - Comparison of dispersion stability of silica dispersions using spherical silica according to method of manufacturing spherical silica >

First, to verify the difference in dispersion stability of the silica dispersion resulting from differences in the internal pore structure of the spherical silica, the tap densities of the spherical silica according to Manufacturing Examples 1 and 2 and Comparative Examples 1 and 2 were measured.

After drying each sample, a specific amount was loaded into a measuring container with a specific capacity, and then it was tapped repeatedly under standardized conditions in accordance with ASTM B527, ISO 787 or JIS K 5101.

Subsequently, the volume of the powder layer after stabilization was recorded, and the tap density of each sample was calculated by dividing the powder mass by the stabilized volume using the following equation. ${ρ}_{t} = \frac{M}{{V}_{t}}$

Here, ρₜ represents the tap density, M represents the powder mass, and Vₜ represents the volume of the powder layer stabilized after tapping. In addition, the powder layer refers to the state in which, when a specific mass of powder is placed in a container for tap density measurement, the powder particles collectively form the total volume before or after tapping.

Meanwhile, the average particle sizes (D50) of Manufacturing Examples 1 and 2 and Comparative Examples 1 and 2 were adjusted so that there would be no significant differences between them, in order to ensure that the differences in tap density primarily reflect the effects of differences in internal pore structure and sphericity.

The tap density measurement results for each sample are shown in Table 6 below.

**[Table 6]**

| **Condition** | **Manufacturing Example 1** | **Manufacturing Example 2** | **Comparative Example 1** | **Comparative Example 2** |
|---|---|---|---|---|
| **Composition** | SiO₂ | | | |
| **Manufacturing method** | Wet method | Wet method | Wet method | Dry method |
| **Tap density(g/mL)** | 0.40 | 0.92 | 0.31 | 0.84 |

Referring to Table 6, the tap densities of both the spherical silica of Manufacturing Example 1 and the spherical silica of Manufacturing Example 2 fell within the range of 0.40 g/mL to 0.95 g/mL.

Meanwhile, since the ratio of the core region and the shell region and the pore distribution differ between Manufacturing Example 1 and Manufacturing Example 2 (e.g., the proportion of the shell region in Manufacturing Example 1 is relatively small compared to Manufacturing Example 2; see FIGs. 3 and 4 for details), it can be interpreted that there is a difference in tap density between Manufacturing Examples 1 and 2.

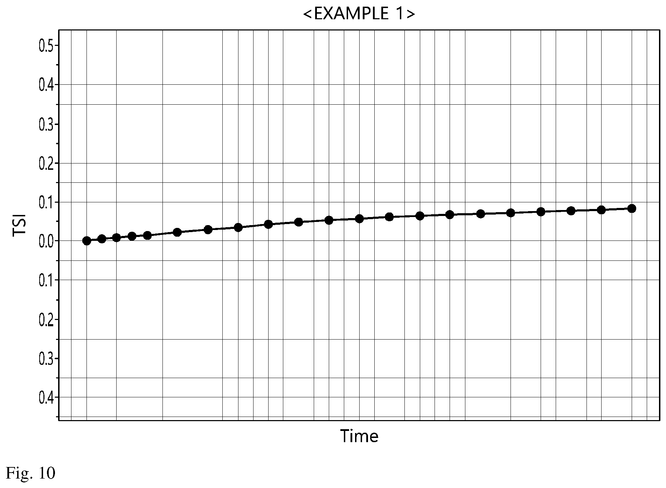

Next, to compare the dispersion stability of the silica dispersions according to Preparation Examples 3.1 and 3.2 and Comparative Examples 3.1 and 3.2 prepared by the above-described methods, the TSI was measured, and the results are shown in FIGs. 10 to 13.

FIG. 10 is a graph showing the change in TSI of a silica dispersion containing the spherical silica according to Manufacturing Example 1 of the present invention.

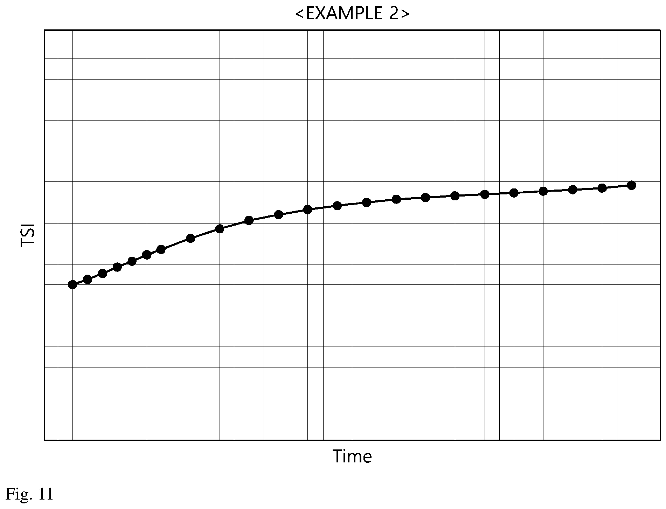

FIG. 11 is a graph showing the change in TSI of a silica dispersion containing the spherical silica according to Manufacturing Example 2 of the present invention.

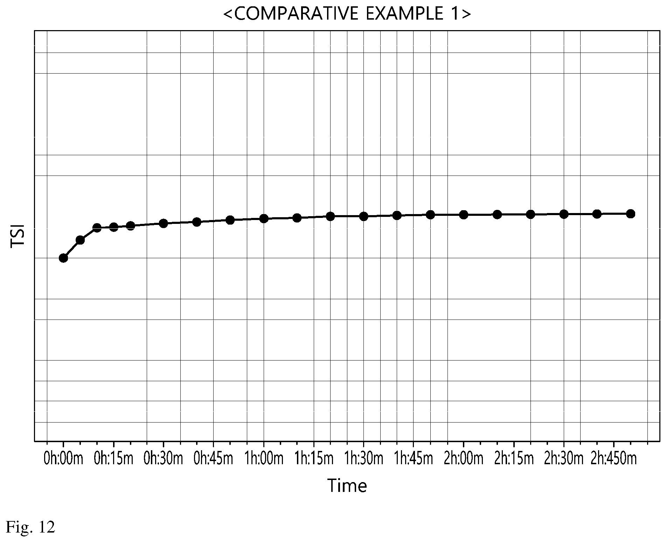

FIG. 12 is a graph showing the change in TSI of a silica dispersion containing the spherical silica according to Comparative Example 1 of the present invention.

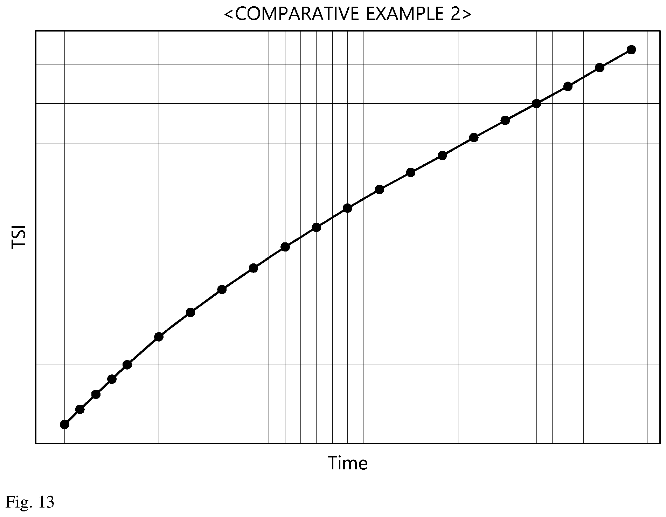

FIG. 13 is a graph showing the change in TSI of a silica dispersion containing the spherical silica according to Comparative Example 2 of the present invention.

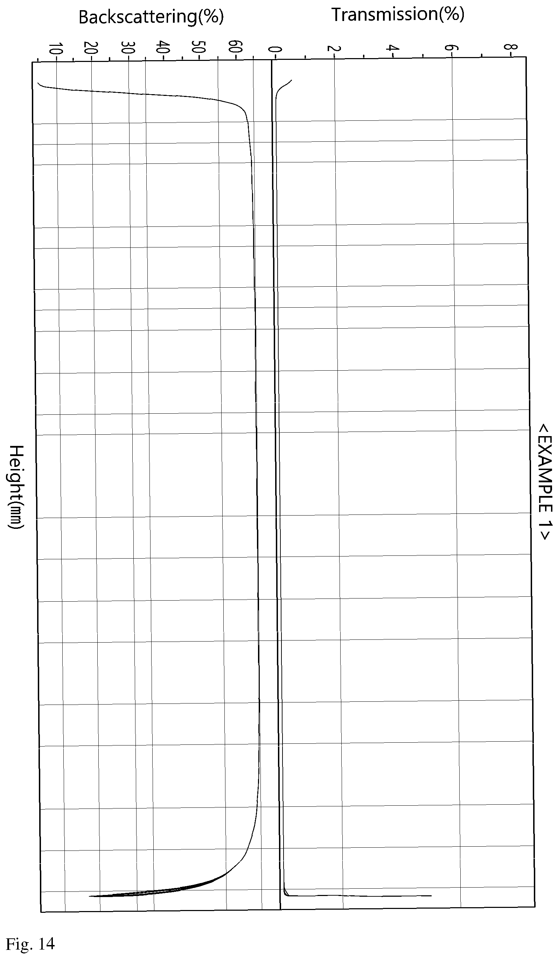

Meanwhile, the BS/T profiles used for TSI measurements were derived according to the measurement conditions described below, and the results are shown in FIGs. 14 to 17.

FIG. 14 is a graph showing the changes in transmittance and backscattering intensity of the silica dispersion containing the spherical silica according to Manufacturing Example 1.

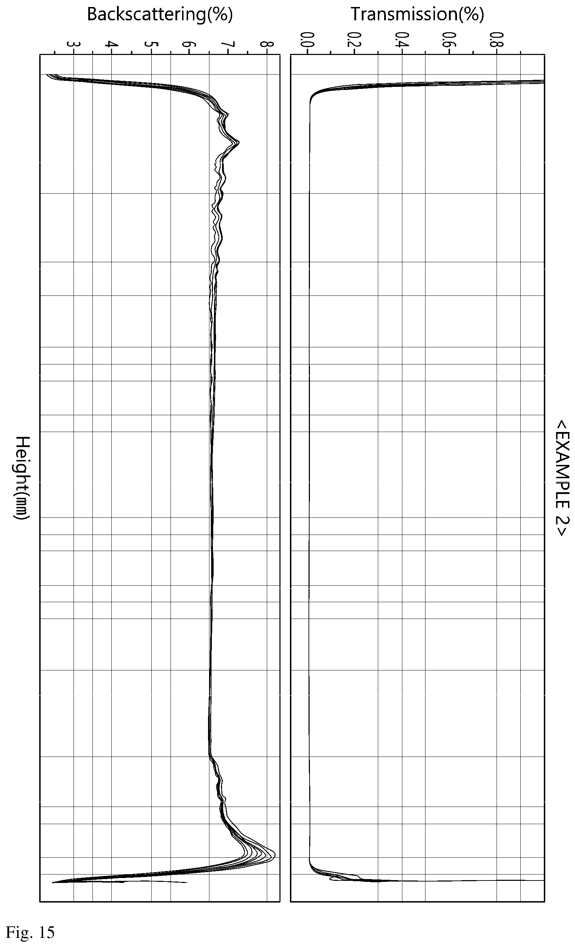

FIG. 15 is a graph showing the changes in transmittance and backscattering intensity of the silica dispersion containing the spherical silica according to Manufacturing Example 2.

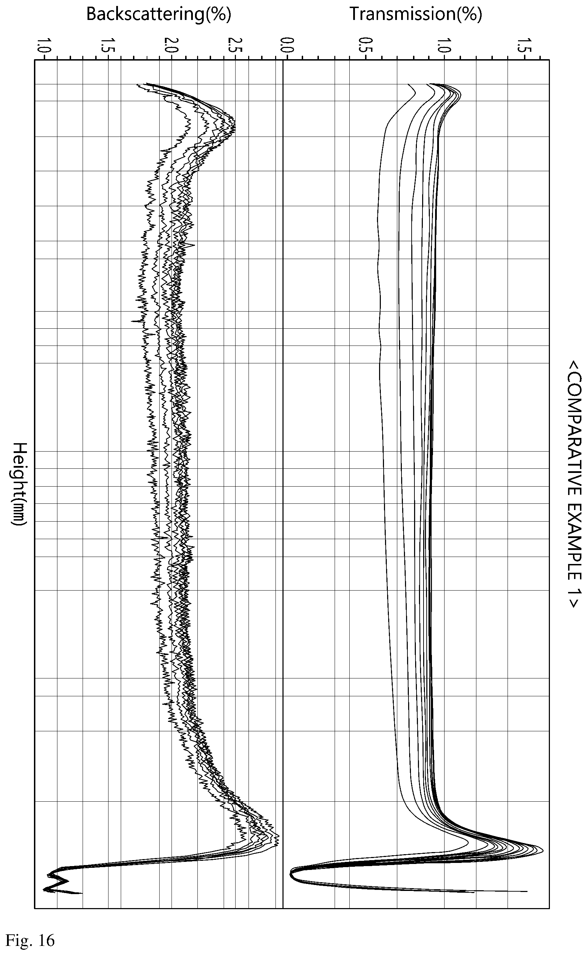

FIG. 16 is a graph showing the changes in transmittance and backscattering intensity of the silica dispersion containing the spherical silica according to Comparative Example 1.

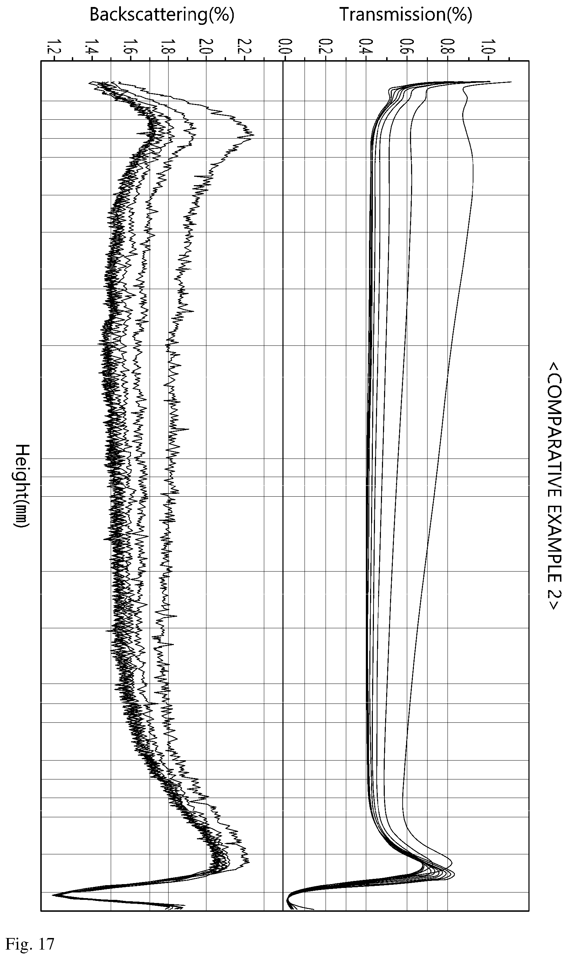

FIG. 17 is a graph showing the changes in transmittance and backscattering intensity of the silica dispersion containing the spherical silica according to Comparative Example 2.

The graphs in FIGs. 10 to 17 show the results measured over three hours at 25 °C.

Mathematical Equation 1 was applied to the BS/T profiles derived as above to calculate the TSI of each silica dispersion, and the results are shown in Table 7 below.

**[Table 7]**

| **Condition** | **Preparation Example 3.1** | **Preparation Example 3.2** | **Comparative Example 3.1** | **Comparative Example 3.2** |
|---|---|---|---|---|
| **Composition** | SiO₂ | | | |
| **Manufacturing method** | Wet method | Wet method | Wet method | Dry method |
| **TSI (in 20% DIS)** | 0.08 | 0.24 | 0.93 | 0.11 |

Referring to Table 7, the TSI values of Preparation Examples 3.1 and 3.2 respectively including Manufacturing Examples 1 and 2 having a gradient porous structure were lower than that of Comparative Example 3.2, and both were 0.30 or less.

Particularly, referring to FIGs. 14 and 15, in the BS/T profiles of the silica dispersions according to Preparation Examples 3.1 and 3.2 including spherical silica with a gradient porous structure, the changes (variations) in transmittance and backscattering intensity between profiles measured multiple times in the region excluding the meniscus was smaller compared to Comparative Examples 3.1 and 3.2.

This suggests that both silica dispersions prepared according to Preparation Examples 3.1 and 3.2 exhibited only limited flocculation or precipitation over time, and accordingly, it can be interpreted that neither the T nor BS profiles show a band associated with phase separation.

On the other hand, referring to FIGs. 16 and 17, both the silica dispersion according to Comparative Example 3.1, which includes spherical silica with a random porous structure, and the silica dispersion according to Comparative Example 3.2, which includes spherical silica with a dense structure, showed intensity variations between profiles measured multiple times in the BS/T profile, excluding the meniscus region.

This can be interpreted as meaning that, since both the silica dispersions according to Comparative Examples 3.1 and 3.2 experienced flocculation or precipitation over time, phase separation bands appeared in all profiles measured multiple times.

Meanwhile, the tap density of the spherical silica in Comparative Example 2 fell within the range of 0.40 to 0.95 g/mL.

In addition, for the silica dispersion according to Comparative Example 3.2, although the TSI value was low, it was shown that dispersion stability, including spatial concentration distribution, needs to be evaluated in consideration with the BS/T profile.

Specifically, as seen from FIG. 17, a difference in strength was observed along a sample height in the BS/T profile of the silica dispersion according to Comparative Example 3.2, suggesting the presence of a spatial concentration gradient or local non-uniformity within the sample. Therefore, it can be interpreted that the silica dispersion according to Comparative Example 3.2 may be disadvantageous in terms of long-term stability, compared to the cases where the spherical silica with a gradient porous structure, as in Examples 3.1 and 3.2 of the present invention, is applied.

On the other hand, the silica dispersions according to Preparation Examples 3.1 and 3.2 maintained low TSI levels while satisfying the tap density conditions for the spherical silica, and showed almost no variation in strength over time as indicated by the BS/T profiles.

Consequently, even when the spherical silica powder with a gradient porous structure is present in the dispersion medium at a high concentration of approximately 20 wt%, interparticle flocculation or precipitation in the dispersion system occurs to a limited extent over time, and therefore, it can be evaluated as a silica dispersion with excellent dispersion stability.

According to any one of the aspects of the present invention described above, spherical silica of the present invention is characterized by gradient porosity, in which the pore size gradually decreases from the center of the core toward the outer surface of the shell. Due to this structural feature, uniform particles with high sphericity can be distributed, and thus the application of the spherical silica to a cosmetic composition provides smooth and silky spreadability on the skin, uniform adherence to the skin surface, and excellent adhesion and persistence.

In addition, according to any one of the aspects of the present invention described above, spherical silica includes a core with relatively large pores and a shell with relatively small pores, and can precisely control the thicknesses of the core and shell. When the spherical silica is applied to a cosmetic composition, these characteristics enable effective regulation of the skin's oil and moisture balance, and can be tailored according to the intended use of a product or the skin type.

In addition, according to any one of the aspects of the present invention described above, spherical silica is a material with high chemical stability and high biocompatibility, and thus can be used as an eco-friendly material because it does not contain a synthetic polymer, an organic material, or a toxic ingredient.

In addition, according to any one of the aspects of the present invention described above, the spherical silica of the present invention has gradient porosity in which the pore size gradually decreases from the center of the core toward the outer surface of the shell, and allows the tap density, measured according to standard specifications, to be controlled to 0.40 to 0.95 g/mL. Due to the structural features described above, there is an advantage that the spherical silica can be maintained in a more stable suspended state within the dispersion medium.

In addition, according to any one of the aspects of the present invention described above, the silica dispersion of the present invention is characterized in that spherical silica having a gradient porous structure is contained in a dispersion medium at a concentration of 10 to 20 wt% based on solid content. Due to this compositional feature, there is an advantage that the spherical silica which is present in the silica dispersion at a high concentration can more uniformly exhibit its inherent functions, such as improving sensory feel, imparting optical properties, and controlling viscosity, in the silica dispersion without flocculation or precipitation.

In addition, according to any one of the aspects of the present invention described above, the spherical silica of the present invention has the technical feature in which the TSI measured using a Turbiscan instrument at 25 °C is controlled to 0.30 or less. Due to this technical feature, even in a silica dispersion with a high solid content, not only is the driving force for sedimentation effectively suppressed, but, even when partial flocculation of spherical silica occurs during product use, it can be relatively easily redispersed, so that almost no changes in viscosity and appearance occur during long-term storage or use.

In addition, according to any one of the aspects of the present invention described above, the present invention has the technical features in which the tap density of spherical silica and the TSI value of a silica dispersion satisfy specific values, and the BS/T profile shows little or substantially no variations in backscattering intensity and transmittance. Due to the technical features described above, the dispersion stability of the dispersion containing a high concentration of spherical silica with a gradient porous structure can be quantitatively defined, and there is an advantage in that batch-to-batch variations can be effectively managed in terms of production quality management.

The effects achieved by the present invention are not limited to those mentioned above, and other effects not mentioned herein will be clearly understood by those of ordinary skill in the art to which the present invention belongs.

It should be understood by those of ordinary skill in the art that the above description of the present invention is exemplary, and the exemplary embodiments disclosed herein can be easily modified into other specific forms without departing from the technical spirit or essential features of the present invention. Therefore, the exemplary embodiments described above should be interpreted as illustrative in all aspects and not restrictive. For example, each component described as a single form may be implemented in a distributed manner, and components described as being distributed may also be implemented in combined form.

The scope of the present invention is indicated by the following claims, and all changes or modifications derived from the meaning and scope of the claims and their equivalent concepts should be interpreted as being included in the scope of the present invention.

### [Explanation of reference numerals]

100: spherical silica
110: core
111: first pore
120: shell
121: second pore

## Claims

1. Spherical silica, comprising:
a plurality of spherical silica particles, each of which comprises
a core having a plurality of first pores and consisting of silica; and
a shell consisting of the same silica and having second pores different from the first pores.

2. The spherical silica of claim 1, wherein the core and the shell are continuously connected toward the center of the spherical silica particle to form a single body.

3. The spherical silica of claim 1, wherein the first pores have a size of 100 nm or less, and
the second pores have a size of 20 nm or less.

4. The spherical silica of claim 1, wherein, when approaching the core from the shell, the size of the second pore gradually increases and becomes the same as that of the first pore at the point where the shell and the core meet.

5. The spherical silica of claim 1, wherein the spherical silica particles have a tap density of 0.40 g/mL to 0.95 g/mL, as measured by any one method of ASTM B527, ISO 787 and JIS K 5101.

6. The spherical silica of claim 1, wherein the average particle size (D50) according to particle size analysis (PSA) is 0.5 to 30 µm.

7. The spherical silica of claim 6, wherein the thickness of the core is 99% or less of the overall diameter of the cross-section of the spherical silica particle.

8. The spherical silica of claim 6, wherein the thickness of the shell is 50% or less of the overall diameter of the cross-section of the spherical silica particle.

9. The spherical silica of claim 1, wherein the oil absorption capacity of a powder according to oil absorption analysis (OA) is 0.2 to 120 mL/g.

10. The spherical silica of claim 1, wherein the specific surface area according to Brunauer-Emmett-Teller (BET) analysis is 100 m²/g or less.

11. The spherical silica of claim 1, wherein the spherical silica particle is configured to allow the absorption/desorption of a material through a plurality of the first and second pores, and
a relative pressure to be applied to the spherical silica particle for adsorption is different from that for desorption.

12. A silica dispersion, comprising:
a dispersion medium; and
spherical silica dispersed in the dispersion medium,
wherein the spherical silica comprises a core having a plurality of first pores and consisting of silica, and
a shell consisting of the same silica as the core and having second pores different from the first pores.

13. The silica dispersion of claim 12, wherein the spherical silica is included at a concentration of 10 to 20 wt% in the dispersion medium based on solid content.

14. The silica dispersion of claim 12, wherein the Turbiscan stability index (TSI) of the silica dispersion measured at 25 °C using Turbiscan equipment is 0.30 or less.

15. The silica dispersion of claim 12, wherein the dispersion medium comprises at least one of a hydrocarbon-based oil, an ester-based oil, a vegetable oil, and a silicone-based oil.
